# EUROPÄISCHE PATENTANMELDUNG

(11) **EP 1 624 015 A1**
(43) Veröffentlichungstag der Anmeldung: **08.02.2006**
(21) Anmeldenummer: 05015176.0
(22) Anmeldetag: 13.07.2005
(51) Int. Cl.: C08K 5/5313, C08K 5/00

(54) **Flammgeschütze Polymerformmassen enthaltend ein nanoteiliges phosphorhaltiges Flammschutzmittel**

(30) Priorität: 22.07.2004 DE 102004035508
(71) Anmelder: Clariant GmbH, 65929 Frankfurt am Main (DE)
(72) Erfinder: Bauer, Harald, Dr., 50170 Kerpen (DE); Hörold, Sebastian, Dr., 86420 Diedorf (DE); Krause, Werner, Dr., 50354 Hürth (DE); Sicken, Martin, Dr., 51149 Köln (DE)
(74) Vertreter: Mikulecky, Klaus

(57) **Zusammenfassung**

Die Erfindung betrifft eine flammgeschützte Polymerformmasse, dadurch gekennzeichnet, dass sie nanoteiliges phosphorhaltiges Flammschutzmittel welches mindestens ein Phosphinsäuresalz der Formel (I) und/oder ein Diphosphinsalz der Formel (II) und/oder deren Polymere enthält, 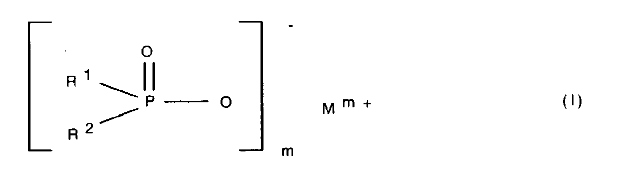 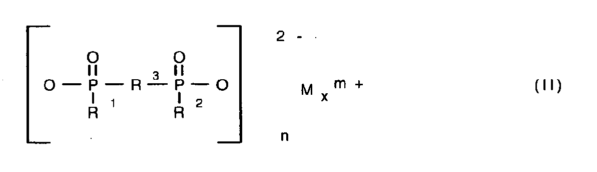 worin
- R¹, R²: gleich oder verschieden sind und C₁-C₆-Alkyl, linear oder verzweigt und/oder Aryl;
- R³: C₁-C₁₀-Alkylen, linear oder verzweigt, C₆-C₁₀-Arylen, -Alkylarylen oder -Arylalkylen;
- M: Mg, Ca, Al, Sb, Sn, Ge, Ti, Fe, Zr, Zn, Ce, Bi, Sr, Mn, Li, Na, K und/oder eine protonierte Stickstoffbase;
- m: 1 bis 4;
- n: 1 bis 4;
- x: 1 bis 4 bedeuten, enthält.

## Beschreibung

Die Erfindung betrifft flammgeschützte Polymerformmassen, ein Verfahren zur Herstellung derselben sowie flammgeschützte Polymerformkörper.

Nanocomposites von Kunststoffen und nanoteiligen Füllstoffen (Nanofiller) zeigen aufgrund ihrer besonderen Struktur außergewöhnliche Eigenschaftsverbesserungen, u.a. Erhöhung der Steifigkeit und Verbesserung der Schlagzähigkeit von Kunststoffformteilen. Bekannte Nanofiller sind organisch modifizierte Schichtsilicate (Bentonite, Montmorillonite, Hectorite, Saponite etc).

Nachteilig ist, dass mit ihnen allein kein ausreichender Flammschutz erreicht werden kann, da sie lediglich als Inertsubstanz wirken.

Es hat daher nicht an Versuchen gefehlt, flammgeschützte Polymere zusätzlich auch mit Nanofiller zu stabilisieren und somit beispielsweise die Glühdrahtentzündungstemperatur (GWIT) anzuheben. Nachteilig ist dabei, dass der Nanofiller als Inertsubstanz wirkt und additiv zum Flammschutzmitttel eingesetzt werden muss. Dadurch wird der Festkörperanteil im flammgeschützten Polymerformkörper erhöht, worunter wiederum die mechanischen Elastizitätswerte leiden.

Überraschend wurde nun gefunden, dass allein durch Verwendung von nanoteiligem Flammschutzmittel die Glühdrahtentzündungstemperatur erhöht werden kann. Daher kann auf das organisch interkalierte Schichtsilikat verzichtet werden. Solchermaßen kann der Festkörperanteil in der flammgeschützten Polymerformmasse gesenkt werden. Dadurch lassen sich flammgeschützte Polymere und Polymerformkörper mit deutlich verbesserten mechanischen Elastizitätswerten herstellen.

Überraschend wurde weiterhin gefunden, dass das erfindungsgemäß eingesetzte nanoteilige phosphorhaltige Flammschutzmittel in transparenten Kunststoffen die Lichtdurchlässigkeit im Vergleich zu nicht-nanoteiligen phosphorhaltigen Flammschutzmitteln erhöht.

Gegenstand der Erfindung sind daher flammgeschützte Polymerformmassen, die ein nanoteiliges phosphorhaltiges Flammschutzmittel welches mindestens ein Phosphinsäuresalz der Formel (I) und/oder ein Diphosphinsalz der Formel (II) und/oder deren Polymere enthält, 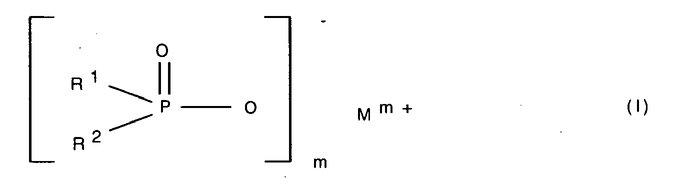 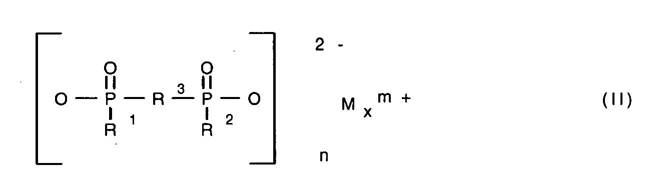
worin
R¹, R² gleich oder verschieden sind und C₁-C₆-Alkyl, linear oder verzweigt und/oder Aryl; R³ C₁-C₁₀-Alkylen, linear oder verzweigt, C₆-C₁₀-Arylen, -Alkylarylen oder -Arylalkylen; M Mg, Ca, Al, Sb, Sn, Ge, Ti, Fe, Zr, Zn, Ce, Bi, Sr, Mn, Li, Na, K und/oder eine protonierte Stickstoffbase; m 1 bis 4; n 1 bis 4; x 1 bis 4 bedeuten, enthalten.

Bevorzugt sind R¹, R² gleich oder verschieden und bedeuten C₁-C₆-Alkyl, linear oder verzweigt und/oder Phenyl.

Bevorzugt sind R¹, R² gleich oder verschieden und bedeuten Methyl, Ethyl, n-Propyl, iso-Propyl, n-Butyl, tert.-Butyl, n-Pentyl und/oder Phenyl.

Bevorzugt bedeutet R³ Methylen, Ethylen, n-Propylen, iso-Propylen, n-Butylen, tert.-Butylen, n-Pentylen, n-Octylen oder n-Dodecylen; Phenylen oder Naphthylen; Methyl-phenylen, Ethyl-phenylen, tert.-Butylphenylen, Methyl-naphthylen; Ethyl-naphthylen oder tert.-Butylnaphthylen; Phenyl-methylen, Phenyl-ethylen, Phenyl-propylen oder Phenyl-butylen.
Bevorzugt beträgt die Teilchengröße des nanoteiligen phosphorhaltigen Flammschutzmittels 1 bis 1.000 nm, besonders bevorzugt 5 bis 500 nm.

Bevorzugt beträgt die Oberfläche des nanoteiligen phosphorhaltigen Flammschutzmittels nach BET 2 bis 1.000 qm/g, besonders bevorzugt 5 bis 500 qm/g.

Bevorzugt enthält das nanoteilige phosphorhaltige Flammschutzmittel 0,01 bis 10 Gew.-% Schutzkolloide und/oder Kristallisationsmodifikatoren.

Bevorzugt enthält die flammgeschützte Polymerformmasse
0,5 bis 45 Gew.-% nanoteiliges phosphorhaltiges Flammschutzmittel,
0,5 bis 95 Gew.-% Polymer oder Mischungen derselben,
wobei die Summe der Komponenten 100 Gew.-% beträgt.

Bevorzugt enthält die flammgeschützte Polymerformmasse
0,5 bis 45 Gew.-% nanoteiliges phosphorhaltiges Flammschutzmittel,
0,5 bis 95 Gew.-% Polymer oder Mischungen derselben
0,5 bis 55 Gew.-% Additive
0,5 bis 55 Gew.-% Füllstoff bzw. Verstärkungsmaterialien,
wobei die Summe der Komponenten 100 Gew.-% beträgt.

Bevorzugt enthält die flammgeschützte Polymerformmasse
10 bis 40 Gew.-% nanoteiliges phosphorhaltiges Flammschutzmittel,
10 bis 80 Gew.-% Polymer oder Mischungen derselben
2 bis 40 Gew.-% Additive
2 bis 40 Gew.-% Füllstoff bzw. Verstärkungsmaterialien,
wobei die Summe der Komponenten 100 Gew.-% beträgt.

Bevorzugt handelt es sich bei dem Polymer um ein thermoplastisches oder duroplastisches Polymer.

Bevorzugt handelt es sich bei dem bei den thermoplastischen Polymeren um Polystyrol-HI (High-Impact), Polyphenylenether, Polyamide, Polyester, Polycarbonate, Polyolefine, Polyether und Blends oder Polymerblends vom Typ ABS (Acrylnitril-Butadien-Styrol) oder PC/ABS (Polycarbonat/Acrylnitril-Butadien-Styrol), Polyamid, Polyester, Polyarylate, Polymethacrylate und/oder ABS.

Bevorzugt handelt es sich bei den duroplastischen Polymeren um Formaldehyd-, Epoxid-, Melamin-, Phenolharz-Polymere und/oder Polyurethane.

Bevorzugt handelt es sich bei dem Additiv um eine Stickstoff-, Phosphor- oder Phosphorstickstoffverbindung.

Bevorzugt handelt es sich bei dem Additiv um Stickstoffverbindungen der Formeln (III) bis (VIII) oder Gemische davon, 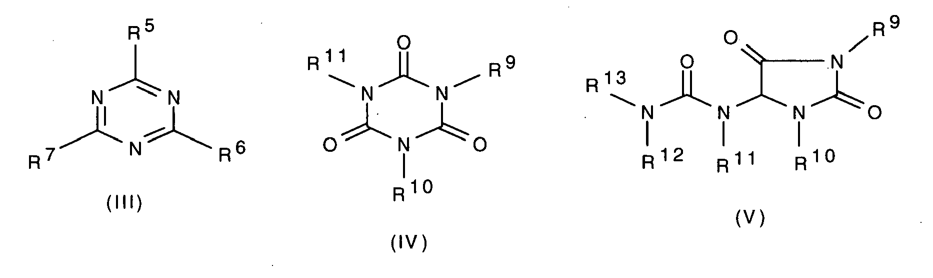 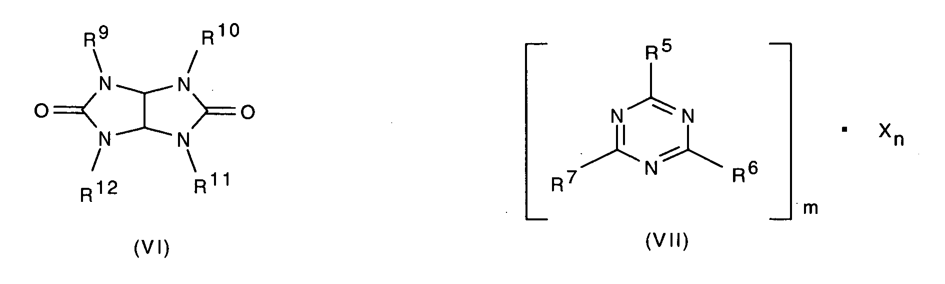 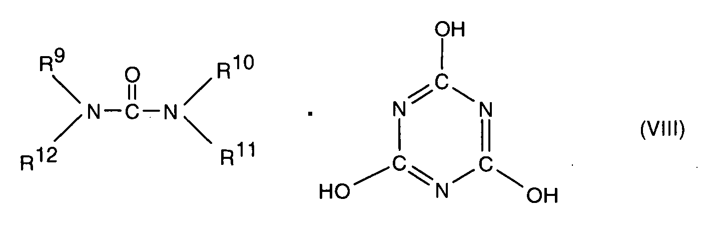
worin
- R⁵ bis R⁷: Wasserstoff, C₁-C₈-Alkyl, C₅-C₁₆-Cycloalkyl oder -Alkylcycloalkyl, ggf. substituiert mit einer Hydroxy- oder einer C₁-C₄-Hydroxyalkyl-Funktion, C₂-C₈-Alkenyl, C₁-C₈-Alkoxy, -Acyl, -Acyloxy, C₆-C₁₂-Aryl oder -Arylalkyl, -OR⁸ und -N(R⁸)R⁹, sowie N-alicyclisch oder N-aromatisch,
- R⁸: Wasserstoff, C₁-C₈-Alkyl, C₅-C₁₆-Cycloalkyl oder -Alkylcycloalkyl, ggf. substituiert mit einer Hydroxy- oder einer C₁-C₄-Hydroxyalkyl-Funktion, C₂-C₈-Alkenyl, C₁-C₈-Alkoxy, -Acyl, -Acyloxy oder C₆-C₁₂-Aryl oder -Arylalkyl,
- R⁹ bis R¹³: die gleichen Gruppen wie R³ sowie -O-R⁸,
- m und n: unabhängig voneinander 1, 2, 3 oder 4,
- X: Säuren, die Addukte mit Triazinverbindungen (III) bilden können, bedeuten.

Bevorzugt handelt es sich bei dem Additiv um Stickstoffverbindungen wie Melamin, Melaminkondensationsprodukte wie Melam, Melem und/oder Melon; Benzoguanamin, Tris(hydroxyethyl)isocyanurat, Allantoin, Glycouril, Melamin, Dicyandiamid und/oder Guanidin.

Bevorzugt handelt es sich bei dem Additiv um Melaminphosphat, Dimelaminphosphat, Melaminpyrophosphat, Melaminpolyphosphate, Melampolyphosphate, Melempolyphosphate und/oder Melonpolyphosphate und/oder um Melamincyanurat und/oder Harnstoffcyanurat.

Bevorzugt handelt es sich bei dem Additiv um Zinkverbindungen wie Zinkoxid, Zinkhydroxid, Zinkoxidhydrat, wasserfreies Zinkcarbonat, basisches Zinkcarbonat, Zinkhydroxidcarbonat, basisches Zinkcarbonathydrat, (basisches) Zinksilicat, Zinkhexafluorosilicat, Zinkstannat, Zink-Magnesium-Aluminium-Hydroxid-Carbonat, Zinkhexafluorosilicathexahydrat, Zinksalze der Oxosäuren der dritten Hauptgruppe wie Zinkborat, Zinksalze der Oxosäuren der fünften Hauptgruppe wie Zinkphosphat, Zinkpyrophosphat, Zinksalze der Oxosäuren der Übergangsmetalle, wie Zinkchromat(VI)hydroxyd (Zinkgelb), Zinkchromit, Zinkmolybdat, Zinkpermanganat, Zinkmolybdat-Magnesiumsilicat, Zinkpermanganat.

Bevorzugt handelt es sich bei dem Additiv um Antimonverbindungen wie Antimontrioxid, Antimontetroxid, Antimonpentoxid, Natriumantimonat und/oder Antimontartrat.
Bevorzugt handelt es sich bei dem Additiv um oligomere Ester des Tris(hydroxyethyl)isocyanurats mit aromatischen Polycarbonsäuren, Carbodiimide, N,N'-Dicyclohexylcarbodiimid, Polyisocyanate, Carbonylbis-caprolactam, Styrol-Acryl-Polymere, sterisch gehinderten Phenole, und/oder um stickstoffhaltige Phosphate der Formeln (NH₄)_{y} H_{3-y} PO₄ bzw. (NH₄ PO₃)_{z}, mit y gleich 1 bis 3 und z gleich 1 bis 10.000, oder Trennmittel.

Bevorzugt handelt es sich bei dem Additiv um mindestens ein Compatibilizer.

Die vorgenannten Additive können auch in nanoteiliger Form vorliegen, bevorzugt in Teilchengrößen von 1 bis 1.000 nm.

Bevorzugt handelt es sich bei dem Compatibilizer um Anhydrid-modifizierte Oligomere oder Hydroxygruppen enthaltende Polyolefin Oligomere, bevorzugt um Polypropylen-Maleinsäureanhydrid-Copolymer, Polyvinylpyrrolidon, Polyvinylalkohol, Polyethylenglycol, Polytetrahydrofuran, Polystyrol, Polycaprolacton, Organosilane und/oder quaternäre Ammoniumverbindungen.

Bevorzugt betragen bei Polybutylenterephthalat-Formmassen die SV-Zahlen 750 bis 1.400, besonders bevorzugt 950 bis 1.300 und insbesondere 1.000 bis 1.200.

Bevorzugt beträgt bei glasfaserverstärkten flammgeschützten Polymerformmassen auf Basis von Polyamid 6.6 der MVR-Wert 2 bis 200 cm³/min (275°C, 5 kg).

Bevorzugt beträgt die Restfeuchte der flammgeschützten Polymerformmassen 0,01 bis 10 Gew.-%, besonders bevorzugt 0,1 bis 1 %.

Bevorzugt beträgt die Transparenz der flammgeschützten Polymerformmassen 70 bis 100 %.

Die Erfindung betrifft auch ein Verfahren zur Herstellung der erfindungsgemäßen flammgeschützten Polymerformmassen, dadurch gekennzeichnet, dass das phosphorhaltige Flammschutzmittel in einem Compoundieraggregat in die Polymerformmasse oder Polymeren dispergiert wird.
In einer anderen Ausführungsform wird das phosphorhaltige Flammschutzmittel mit der Polymerformmasse in einem Compoundieraggregat in Polymeren dispergiert. Bevorzugt werden bei den vorgenannten Verfahren weitere Polymere, Additive, Hilfsmittel, insbesondere Dispergiermittel und/oder Compatibilizer zugesetzt. Bevorzugt handelt es sich bei den Compoundieraggregaten um ein- und zweiwellige Schneckenkneter, Co-Kneter, Brabenderkneter, Kalander, Walzenstühle, Dreiwalzen oder Walzenmühlen.

Bevorzugt beträgt die Temperatur 50 bis 150°C, die Reaktionszeit 0,01 bis 100 h und der Druck 1 bis 200 MPa.

Bevorzugt wird als Additiv mindestens ein Compatibilizer in Mengen von 0,01 bis 10 Gew.-%, besonders bevorzugt in Mengen von 1 bis 5 Gew.-% (bezogen auf nanoteiliges phosphorhaltiges Flammschutzmittel) zugesetzt.

Bevorzugt enthält der Compatibilizer Anhydrid-modifizierte Oligomere oder Hydroxy-Gruppen enthaltende Polyolefin Oligomere, bevorzugt Polypropylen-Maleinsäureanhydrid-Copolymer, Polyvinylpyrrolidon, Polyvinylalkohol, Polyethylenglycol, Polytetrahydrofuran, Polystyrol, Polycaprolacton, Organosilane und/oder quaternäre Ammoniumverbindungen.

Bevorzugt betragen die Verarbeitungstemperaturen beim vorgenannten Verfahren bei Polystyrol 170 bis 200°C, bei Polypropylen 200 bis 300°C, bei Polyethylenterephthalat (PET) 250 bis 290°C, bei Polybutylenterephthalat (PBT) 230 bis 270°C, bei Polyamid 6 (PA 6) 260 bis 290°C,' bei Polyamid 6.6 (PA 6.6) 260 bis 290 °C und bei Polycarbonat 280 bis 320°C.

Bevorzugt betragen die UD-Werte des Schneckenkneters, Co-Kneters und/oder Extruders 1 bis 100, bevorzugt 2 bis 50.

Bevorzugt betragen die Scherraten des Compoundieraggregats 10 sec⁻¹ bis 20.000 sec⁻¹, besonders bevorzugt 100 sec⁻¹ bis 10.000 sec⁻¹.

Die Erfindung betrifft auch Polymer-Formkörper, -Filme, -Fäden und -Fasern enthaltend ein nanoteiliges phosphorhaltiges Flammschutzmittel, welches ein Phosphinsäuresalz der Formel (I) und/oder ein Diphosphinsäuresalz der Formel (II) und/oder deren Polymere enthält, 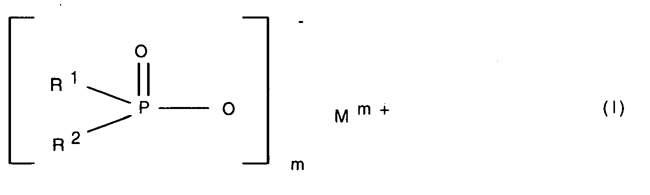 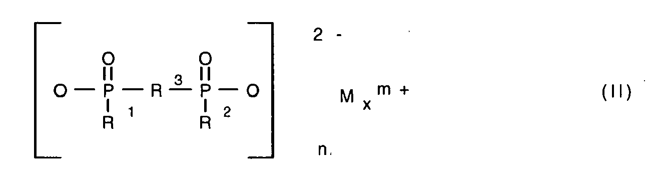
worin R¹, R² gleich oder verschieden sind und C₁-C₆-Alkyl, linear oder verzweigt und/oder Aryl; R³ C₁-C₁₀-Alkylen, linear oder verzweigt, C₆-C₁₀-Arylen, -Alkylarylen oder -Arylalkylen;
M Mg, Ca, Al, Sb, Sn, Ge, Ti, Fe, Zr, Zn, Ce, Bi, Sr, Mn, Li, Na, K und/oder eine protonierte Stickstoffbase; m 1 bis 4; n 1 bis 4; x 1 bis 4, bedeuten.

Bevorzugt enthalten die Polymer-Formkörper, -Filme, -Fäden und -Fasern
0,5 bis 45 Gew.-% nanoteiliges phosphorhaltiges Flammschutzmittel,
0,5 bis 95 Gew.-% Polymer oder Mischungen derselben.

Bevorzugt enthalten die Polymer-Formkörper, -Filme, -Fäden und -Fasern
0,5 bis 45 Gew.-% nanoteiliges phosphorhaltiges Flammschutzmittel,
0,5 bis 95 Gew.-% Polymer oder Mischungen derselben
0,5 bis 55 Gew.-% Additive
0,5 bis 55 Gew.-% Füllstoff bzw. Verstärkungsmaterialien.

Bevorzugt enthalten die Polymer-Formkörper, -Filme, -Fäden und -Fasern
10 bis 40 Gew.-% nanoteiliges phosphorhaltiges Flammschutzmittel,
10 bis 80 Gew.-% Polymer oder Mischungen derselben
2 bis 40 Gew.-% Additive
2 bis 40 Gew.-% Füllstoff bzw. Verstärkungsmaterialien.

Die Erfindung betrifft auch Polymer-Formkörper, -Filme, -Fäden und -Fasern enthaltend die erfindungsgemäßen flammgeschützten Polymerformmassen.

Bevorzugt enthalten dabei die Polymer-Formkörper, -Filme, -Fäden und -Fasern
60 bis 98 Gew.- % flammgeschützte Polymerformmasse,
1 bis 40 Gew.-% Polymer oder Mischungen derselben.

Besonders bevorzugt enthalten dabei die Polymer-Formkörper, -Filme, -Fäden und -Fasern 60 bis 98 Gew.- % flammgeschützte Polymerformmasse,
1 bis 40 Gew.-% Polymer oder Mischungen derselben
0,2 bis 40 Gew.-% Additive
0,2 bis 40 Gew.-% Füllstoff bzw. Verstärkungsmaterialien.

Bei den vorgenannten Polymer-Formkörpern, -Filmen, -Fäden und -Fasern beträgt der E-Modul bei Polybutylenterephthalat oder Polyamid 6.6 oder Polyamid 6 10.000 bis 12.000 MPa.

Bei den vorgenannten Polymer-Formkörpern, -Filmen, -Fäden und -Fasern beträgt die UL-94-Klassifizierung der Polymerformkörper V-1 oder V-0.

Bevorzugt beträgt bei den Polymer-Formkörpern, -Filmen, -Fäden und -Fasern die Reißdehnung in Falle von Polybutylenterephthalat 1,3 bis 3, bevorzugt 1,9 bis 2,2 %.

Bevorzugt beträgt bei den Polymer-Formkörpern, -Filmen, -Fäden und -Fasern die Schlagzähigkeit bei Polybutylenterephthalat 45 bis 70, bevorzugt 55 bis 62 kJ/qm.

Bevorzugt beträgt bei den Polymer-Formkörpern, -Filmen, -Fäden und -Fasern ihre Glühdrahttemperatur (Glow Wire Ignition Test, GWIT) bei Polybutylenterephthalat 750 bis 900, bevorzugt 775 bis 875°C.

Bevorzugt beträgt die Transparenz der Polymer-Formkörper, -Filme, -Fäden und -Fasern 70 bis 100 %.

Bevorzugt beträgt bei den Polymer-Formkörpern, -Filmen, -Fäden und -Fasern die Teilchengröße des nanoteiligen phosphorhaltigen Flammschutzmittels 1 bis 1.000 nm, bevorzugt 5 bis 500 nm, und/oder die Oberfläche des nanoteiligen phosphorhaltigen Flammschutzmittels nach BET 2 bis 1.000 qm/g, bevorzugt 5 bis 500 qm/g beträgt und/oder das nanoteilige phosphorhaltige Flammschutzmittel enthält 0,01 bis 10 Gew.-% Schutzkolloide und/oder Kristallisationsmodifikatoren.

Die Erfindung betrifft auch ein Verfahren zur Herstellung von Polymerformkörper, -filmen, -fäden und -fasern mittels Spritzgießen.

Die Verarbeitungstemperaturen beim vorgenannten Verfahren betragen bei Polystyrol 200 bis 250°C, bei Polypropylen 200 bis 300°C, bei Polyethylenterephthalat (PET) 250 bis 290°C, bei Polybutylenterephthalat (PBT) 230 bis 270°C, bei Polyamid 6 (PA 6) 260 bis 290°C, bei Polyamid 6.6 (PA 6.6) 6.6 260 bis 290°C und bei Polycarbonat 280 bis 320°C.

Bevorzugt bedeutet M Aluminium, Calcium, Titan, Zink, Zinn oder Zirkonium. Unter protonierten Stickstoffbasen werden bevorzugt die protonierten Basen von Ammoniak, Melamin, Triethanolamin, insbesondere NH₄⁺, verstanden.

Bevorzugt einsetzbare Phosphinsäuresalze sind Aluminiumtrisdiethylphosphinat, Aluminiumtrismethylethylphosphinat, Aluminiumtrisdiphenylphosphinat und Mischungen davon.

Die Aluminiumtrisdiethylphosphinate enthalten ggf. 0,01 bis 10% Nebenbestandteile aus der Gruppe Aluminium-Ethylbutylphosphinat, Aluminium-Ethylphosphonat, Aluminiumphosphit und/oder Aluminiumhypophosphit.

Bevorzugt einsetzbare Phosphinsäuresalze sind auch Zinkbisdiethylphosphinat, Zinkbismethylethylphosphinat, Zinkbisdiphenylphosphinat und Mischungen davon.

Das Zinkbisdiethylphosphinat enthält dabei ggf. 0,01 bis 10 % Nebenbestandteile aus der Gruppe Zink-Ethylbutylphosphinat, Zink-Ethylphosphonat, Zinkphosphit und/oder Zinkhypophosphit.
Bevorzugt einsetzbare Phosphinsäuresalze sind auch Titanylbisdiethylphosphinat, Titantetrakisdiethylphosphinat, Titanylbismethylethylphosphinat, Titantetrakismethylethylphosphinat, Titanylbisdiphenylphosphinat, Titantetrakisdiphenylphosphinat und beliebige Mischungen davon.

Die bevorzugte Schüttdichte des erfindungsgemäß einsetzbaren nanoteiligen phosphorhaltigen Flammschutzmittels beträgt 10 bis 1000 g/l, insbesondere 40 bis 400 g/l und seine Restfeuchte 0,01 bis 10 Gew.-%, besonders bevorzugt 0,1 bis 1 %.

Die bevorzugten L-Farbwerte des erfindungsgemäß einsetzbaren nanoteiligen phosphorhaltigen Flammschutzmittels betragen 85 bis 99,9, besonders bevorzugt 90 bis 98.

Die a-Farbwerte der erfindungsgemäß einsetzbaren nanoteiligen phosphorhaltigen Flammschutzmittel betragen bevorzugte von -4 bis +9, besonders bevorzugt -2 bis +6 und ihre b-Farbwerte betragen bevorzugt von -2 bis +6, besonders bevorzugt -1 bis +3.

Die Farbwerte werden im System nach Hunter (CIE-LAB-System, Commission Internationale d'Eclairage) angegeben. L-Werte gehen von 0 (schwarz) bis 100 (weiß), a-Werte von -a (grün) bis +a (rot) und b-Werte von -b (blau) bis +b (gelb).

Nanoteilige phosphorhaltige Flammschutzmittel mit L-Werten unterhalb oder mit a-bzw. b-Werten außerhalb der vorgenannten Bereiche erfordern einen höheren Weißpigmenteinsatz. Dieser verschlechtert die mechanischen Stabilitätseigenschaften des Polymerformkörpers (z.B. E-Modul).

Bevorzugt liegt das nanoteilige phosphorhaltige Flammschutzmittel dispergiert in Polymeren vor.

Bevorzugt hat das nanoteilige phosphorhaltige Flammschutzmittel vor dem Dispergieren in Polymeren bereits die endgültige Teilchengröße. Diese wird durch geeignete Herstellverfahren erzielt, wobei diese bevorzugt in geeigneten Minireaktoren und/oder Mikroreaktoren wie in DE-A-101 48 615 und/oder EP-A-1 167 461 beschrieben, durchgeführt werden.

In einem Mikroreaktor beträgt der bevorzugte Durchsatz 10⁻³ I/h bis 10³ I/h und in einem Minireaktor beträgt der bevorzugte Durchsatz 10² I/h bis 10⁵ I/h.

Bevorzugt wird die Reaktion so ausgeführt, dass eine geeignete Aluminium-, Zink-, Titan-, Zirkonium- und/oder Zinnverbindung (Komponente A) mit einer löslichen Verbindung der Phosphinsäure der Formel (I) und/oder ein Diphosphinsäure der Formel (II) und/oder deren Polymere (Komponente B) umgesetzt werden. Bevorzugt werden die Komponenten A) und B) im Verhältnis A zu B von 100 zu 1 bis 1 zu 100 Ladungsäquivalent Metall/Mol Phosphor eingesetzt, besonders bevorzugt im Verhältnis A zu B von 10 zu 1 bis 1 zu 10 Ladungsäquivalent Metall/Mol Phosphor. Ladungsäquivalent Metall ist dabei der Bruch von Molzahl Metall dividiert durch Ladungszahl der Metallspezies.

Bevorzugte Bedingungen sind Temperaturen von 0 bis 300°C und Reaktionszeiten von 1*10⁻⁷ bis 1*10² h. Der Druck kann von 0,1 bis 196 MPa betragen.

Bevorzugt werden bei der Reaktion der Komponenten A und B 0,01 bis 10 Gew.-% Schutzkolloide und/oder Kristallisationsmodifikatoren, bezogen auf nanoteiliges phosphorhaltiges Flammschutzmittel, eingesetzt.

Bevorzugte Schutzkolloide und/oder Kristallisationsmodifikatoren sind z.B. polymere quarternäre Ammoniumsalze (® Genamin PDAC, Fa. Clariant), Polyethylenimin (® Lupasol G 20, Fa. BASF), Gallussäure, Gelatine, Phosphonsäuren und deren Salze (Ethylphosphonsäure, [(Phosphonomethyl)imino]bis[2,1-ethandiylnitrilo-bis(methylen)]tetrakisphosphonsäure (® Cublen D50), Amino-tris(methylen)-phosphonsäure (® Cublen AP 5), 1-Hydroxyethan-1,1-diphosphonsäure (® cublen K 60) und/oder Natriumpyrophosphat.

Ein anderes Verfahren zur Herstellung von nanoteiligem phosphorhaltigem Flammschutzmittel ist der Sol-Gel Prozess, wobei die vorgenannte Komponente A hydrolysiert und dann mit einer der vorgenannten Komponenten B umgesetzt wird. In einer anderen Ausgestaltung wird Komponente A in Gegenwart von Komponente B hydrolysiert.

Bevorzugt ist die Komponente A eine Aluminium-/Titan-/Zink-/Zinn-/Zirkonium-Organische Verbindung.

Bevorzugte Aluminium-/Titan-/Zink-/Zinn-/Zirkonium-Organische Verbindungen sind Aluminium-/Titan-/Zink-/Zinn-/Zirkoniumalkoxide, insbesondere Aluminium-Alkoxide sind Aluminium-n-butoxid, Aluminium-sec-butoxid, Aluminium-tert-butoxid, und/oder Aluminium-isopropoxid; Zinn-(IV)-tert-butoxid; Zirkon-(IV)-tert-butoxid-, Titan-(IV)-n-propoxid (®Tilcom NPT, Vertec NPT), Titan-(IV)-n-butoxid, Titanchloridtriisopropoxid, Titan-(IV)-ethoxid, Titan-(IV)-2-ethylhexyloxid (®Tilcom EHT, ®Vertec EHT). Bevorzugt ist dabei die Verwendung von Acetylacetonat als Chelatisierungsmittel.

Die vor genannte Reaktion kann wiederum in einem Mikroreaktor oder Minireaktor unter den üblichen Bedingungen durchgeführt werden.

Das bevorzugt einsetzbare nanoteiligem phosphorhaltige Flammschutzmittel kann durch Nassmahlung hergestellt werden, wobei es in einer Konzentration von 0,1 bis 50 Gew.-%, bevorzugt 1 bis 20 Gew.-% in einem Lösungsmittel dispergiert und dann nassgemahlen wird.

Wie zuvor beschrieben, betrifft die Erfindung auch flammgeschützte Polymerformmassen, die nanoteilige phosphorhaltige Flammschutzmittel enthalten. Der Ausdruck Polymerformmassen ist dabei als synonym zu Composits bzw. Compounds zu verstehen.

Zur Beurteilung der Verträglichkeit kann auch der Volumenfließindex (Melt Flow Index, MFI, MVR) herangezogen werden. Ein starker Anstieg des MVR-Wertes deutet auf Polymerabbau hin.

Bevorzugt handelt es sich bei den Polymeren um Polymere von Mono- und Diolefinen, beispielsweise Polypropylen, Polyisobutylen, Polybuten-1, Poly-4-methylpenten-1, Polyisopren oder Polybutadien sowie Polymerisate von Cycloolefinen wie z.B. von Cyclopenten oder Norbornen; ferner Polyethylen (das ggf. vernetzt sein kann), z.B. Polyethylen hoher Dichte (HDPE), Polyethylen hoher Dichte und hoher Molmasse (HDPE-HMW), Polyethylen hoher Dichte und ultrahoher Molmasse (HDPE-UHMW), Polyethylen mittlerer Dichte (MDPE), Polyethylen niederer Dichte (LDPE), lineares Polyethylen niederer Dichte (LLDPE), verzweigtes Polyethylen niederer Dichte (VLDPE), sowie Mischungen davon.

Bevorzugt handelt es sich bei den Polymeren um Copolymere von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere und deren Copolymere mit Kohlenstoffmonoxid, oder Ethylen-Acrylsäure-Copolymere und deren Salze (lonomere), sowie Terpolymere von Ethylen mit Propylen und einem Dien, wie Hexadien, Dicyclopentadien oder Ethylidennorbornen; ferner Mischungen solcher Copolymere untereinander, z.B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere, LLDPE/Ethylen-Acrylsäure-Copolymere und alternierend oder statistisch aufgebaute Polyalkylen/Kohlenstoffmonoxid-Copolymere und deren Mischungen mit anderen Polymeren wie z.B. Polyamiden. Bevorzugt handelt es sich bei den Polymeren um Kohlenwasserstoffharze (z.B. C₅-C₉) inklusive hydrierte Modifikationen davon (z.B. Klebrigmacherharze) und Mischungen von Polyalkylenen und Stärke.

Bevorzugt handelt es sich bei den Polymeren um Polystyrol, Poly-(p-methylstyrol) und/oder Poly-(alpha-methylstyrol).

Bevorzugt handelt es sich bei den Polymeren um Copolymere von Styrol oder alpha-Methylstyrol mit Dienen oder Acrylderivaten, wie z.B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol, Styrol-Isopren-Styrol, Styrol-Ethylen/Butylen-Styrol oder Styrol-Ethylen/Propylen-Styrol.

Bevorzugt handelt es sich bei den Polymeren um Pfropfcopolymere von Styrol oder alpha-Methylstyrol, wie z.B. Styrol auf Polybutadien, Styrol auf Polybutadien-Styrol-oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen, wie sie z.B. als so genannte ABS-, MBS-, ASA- oder AES-Polymere bekannt sind.

Bevorzugt handelt es sich bei den Polymeren um halogenhaltige Polymere, wie z.B. Polychloropren, Chlorkautschuk, chloriertes und bromiertes Copolymer aus Isobutylen-Isopren (Halobutylkautschuk), chloriertes oder chlorsulfoniertes Polyethylen, Copolymere von Ethylen und chloriertem Ethylen, Epichlorhydrinhomo-und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.

Bevorzugt handelt es sich bei den Polymeren um Polymere, die sich von alpha, beta -ungesättigten Säuren und deren Derivaten ableiten, wie Polyacrylate und Polymethacrylate, mit Butylacrylat schlagzäh modifizierte Polymethylmethacrylate, Polyacrylamide und Polyacrylnitrile und Copolymere der genannten Monomeren untereinander oder mit anderen ungesättigten Monomeren, wie z.B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.

Bevorzugt handelt es sich bei den Polymeren um Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit Olefinen.

Bevorzugt handelt es sich bei den Polymeren um Homo- und Copolymere von cyclischen Ethern, wie Polyalkylenglykole, Polyethylenoxyd, Polypropylenoxyd oder deren Copolymere mit Bisglycidylethern.

Bevorzugt handelt es sich bei den Polymeren um Polyacetale, wie Polyoxymethylen, sowie solche Polyoxymethylene, die Comonomere, wie z.B. Ethylenoxid, enthalten; Polyacetale, die mit thermoplastischen Polyurethanen, Acrylaten oder MBS modifiziert sind.

Bevorzugt handelt es sich bei den Polymeren um Polyphenylenoxide und -sulfide und deren Mischungen mit Styrolpolymeren oder Polyamiden.

Bevorzugt handelt es sich bei den Polymeren um Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.

Bevorzugt handelt es sich bei den Polymeren um Polyamide und Copolyamide, die sich von Diaminen und Dicarbonsäuren und/oder von Aminocarbonsäuren oder den entsprechenden Lactamen ableiten, wie Polyamid 4, Polyamid 6 (®Akulon K122, DSM; ®Zytel 7301, Fa. DuPont; ®Durethan B 29, Fa. Bayer), Polyamid 6/6 (®Zytel 101, Fa. DuPont; ®Durethan A30, ®Durethan AKV, ®Durethan AM, Fa. Bayer; ®Ultramid A3, Fa BASF) 6/10, 6/9, 6/12, 4/6, 12/12, Polyamid 11, Polyamid 12 (®Grillamid L20, Fa. Ems Chemie), aromatische Polyamide ausgehend von m-Xylol, Diamin und Adipinsäure; Polyamide, hergestellt aus Hexamethylendiamin und Iso-und/oder Terephthalsäure und gegebenenfalls einem Elastomer als Modifikator, z.B. Poly-2,4,4-trimethylhexamethylenterephthalamid oder Poly-m-phenylenisophthalamid. Blockcopolymere der vorstehend genannten Polyamide mit Polyolefinen, Olefin-Copolymeren, lonomeren oder chemisch gebundenen oder gepfropften Elastomeren; oder mit Polyethern, wie z.B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").

Bevorzugt handelt es sich bei den Polymeren um Polyharnstoffe, Polyimide, Polyamidimide, Polyetherimide, Polyesterimide, Polyhydantoine und Polybenzimidazole.

Bevorzugt handelt es sich bei den Polymeren um Polyester, die sich von Dicarbonsäuren und Dialkoholen und/oder von Hydroxycarbonsäuren oder den entsprechenden Lactonen ableiten, wie Polyethylenterephthalat, Polybutylenterephthalat (®Celanex 2500, ®Celanex 2002, Fa Celanese; ®Ultradur, Fa. BASF), Poly-1,4-dimethylolcyclohexanterephthalat, Polyhydroxybenzoate, sowie Block-Polyetherester, die sich von Polyethern mit Hydroxylendgruppen ableiten; ferner mit Polycarbonaten oder MBS modifizierte Polyester.

Bevorzugt handelt es sich bei den Polymeren um Polycarbonate und Polyestercarbonate, auch um Polysulfone, Polyethersulfone und Polyetherketone.

Bevorzugt handelt es sich bei den Polymeren um vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.

Bevorzugt handelt es sich bei den Polymeren um trocknende und nicht-trocknende Alkydharze.

Bevorzugt handelt es sich bei den Polymeren um ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.

Bevorzugt handelt es sich bei den Polymeren um vernetzbare Acrylharze, die sich von substituierten Acrylsäureestern ableiten, wie z.B. von Epoxyacrylaten, Urethanacrylaten oder Polyesteracrylaten.

Bevorzugt handelt es sich bei den Polymeren um Alkydharze, Polyesterharze und Acrylatharze, die mit Melaminharzen, Harnstoffharzen, Isocyanaten, Isocyanuraten, Polyisocyanaten oder Epoxidharzen vernetzt sind.

Bevorzugt handelt es sich bei den Polymeren um vernetzte Epoxidharze, die sich von aliphatischen, cycloaliphatischen, heterocyclischen oder aromatischen Glycidylverbindungen ableiten, z.B. Produkte von Bisphenol-A-diglycidylethern, Bisphenol-F-diglycidylethern, die mittels üblichen Härtern wie z.B. Anhydriden oder Aminen mit oder ohne Beschleunigern vernetzt werden.

Bevorzugt handelt es sich bei den Polymeren um Mischungen (Polyblends) der vorgenannten Polymeren, wie z.B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO, PBT/PC/ABS oder PBT/PET/PC.

Bevorzugte Formen für Verstärkungsmaterialien für flammgeschützte Polymerformmassen und flammgeschützte Polymer-Formkörper sind Fasern, Vliese, Matten, Gewebe, Stränge, Bänder, Schläuche, Litzen, Massiv-, Form- und Hohlkörper.

Bevorzugte Materialien für Verstärkungsmaterialien für flammgeschützte Polymerformmassen und flammgeschützte Polymer-Formkörper sind anorganische Materialien wie E-Glas (Aluminium-Bor-Silicat-Glas für die allgemeine Kunststoffverstärkung und für elektrische Anwendungen), R-Glas und S-Glas (Spezialgläser für hohe mechanische Anforderungen auch bei erhöhter Temperatur, D-Glas (Spezialglas für erhöhte dielektrische Anforderungen auch bei erhöhter Temperatur, C-Glas (Alkali-Kalk-Glas mit erhöhtem Bor-Zusatz für besondere chemische Widerstandsfähigkeit), Quarz-Glas, Kohlenstoff, Mineralien, Metall (Stahl, Aluminium, Magnesium, Molybdän, Wolfram), Keramik (Metalloxide).

Bevorzugte Materialien für Verstärkungsmaterialien für flammgeschützte Polymerformmassen und flammgeschützte Polymer-Formkörper sind Polykondensate wie z.B. Polyamid-6 (z.B. ®Perlon), Polyamid-6.6 (z.B. ®Nylon), Polyamid-11 (z.B. ®Rilsan, ®Qiana), aromatische Polyamide (Poly-m-phenylenisophtalamid (z.B. ®Nomex), Poly-p-phenylenterephthalamid (z.B. ®Aramid, ®Kevlar)), Polyethylenglycolterephthalat (z.B. ®Dacron, ®Diolen, ®Terylene, ®Trevira, ®Vestan, etc.), Poly-1,4-dimethylencyclohexanterephthalat (z.B. ®Kodel, ®Vestan X 160, etc.), Polycarbonat, Polyurethan-Elastomere (z.B. ®Dorlastan, ®Lycra, etc.).

Bevorzugte Materialien für Verstärkungsmaterialien für flammgeschützte Polymerformmassen und flammgeschützte Polymer-Formkörper sind Polymerisate wie z.B. Polyethylen, Polypropylen, Polyacrylnitril-Homopolymer, Polyacrylnitril-Mischpolymer (z.B. ®Dralon, ®Orlon), Modacryle (z.B. ®Kanekalon, ®Venel), ataktisches Polyvinylchlorid (z.B. ®Rhovyl, ®Fibravyl), syndiotaktisches Polyvinylchlorid (z.B. ®Leavil), Polyvinylalkohol (z.B. ®Kuralon, ®Vinylal, ®Vinylon), Polytetrafluorethylen (z.B. ®Teflon, ®Hostaflon), Polystyrol (z.B. ®Polyfiber, ®Styroflex).

Bevorzugte Materialien für Verstärkungsmaterialien für flammgeschützte Polymerformmassen und flammgeschützte Polymer-Formkörper sind natürliche und halbsynthetische Fasern (Viscosecellulose, Kupfercellulose, Celluloseacetat, Cellulosetriacetat, Flachs, Hanf, Sisal, Jute, Ramie, Baumwolle).

Bevorzugte Dimensionen für Glas-Kurzfasern sind Längen von 0,01 bis 10 mm und Durchmesser von 0,005 bis 0,015 mm.

Die flammgeschützte Polymerformmasse liegt bevorzugt in Granulatform (Compound) vor. Das Granulat hat bevorzugt Zylinderform mit kreisförmiger, elliptischer oder unregelmäßiger Grundfläche, Kugelform, Kissenform, Würfelform, Quaderform, Prismenform.

Das Längen-zu-Durchmesser-Verhältnis des Granulates beträgt 1 zu 50 bis 50 zu 1, bevorzugt 1 zu 5 bis 5 zu 1 und das Das Granulat hat bevorzugt einen Durchmesser von 0,5 bis 15 mm, besonders bevorzugt von 2 bis 3 mm und bevorzugt eine Länge von 0,5 bis 15 mm, besonders bevorzugt von 2 bis 5 mm.

Bevorzugtes Verfahren zur Herstellung von flammgeschützten Polymerformmassen ist das Polymerisieren des erfindungsgemäßen Polymers in Gegenwart des nanoteiligen phosphorhaltigen Flammschutzmittels (in-situ Polymerisation).

Bevorzugte thermoplastische Polymere sind Polyamide, Polyimide, Polystyrole, Polyester, Polyolefine und Polymere von alpha-beta ungesättigten Monomeren und Copolymeren.

Im Falle der radikalischen Polymerisation werden Monomer, nanoteiliges phosphorhaltiges Flammschutzmittel und Initiator mit einem Hochgeschwindigkeitsmischer vermischt und zur Polymerisation gebracht. Bevorzugte Bedingungen sind Temperaturen von 0 bis 300°C, bevorzugt 50 bis 150°C und Zeiten von 0,01 bis 100 h. Der Druck kann sich zwischen Druck von 1 bis 200 MPa bewegen.

Im Falle von hydrophoben Monomeren ist insbesondere die Suspensionspolymerisation bevorzugt. Dann ist wiederum der Zusatz von Emulgierhilfsmitteln und erfindungsgemäßen Lösemitteln bevorzugt.

Besonders bevorzugt sind Styrol, Alkylstyrole and Divinylbenzol. Besonders bevorzugt sind Styrol, alpha-Methylstyrol, p-Methylstyrol und Divinylbenzol. Nach der Erfindung können eine oder mehrere Typen von oben genannten Styrolen in jeder gewünschten Konfiguration (co)polymerisiert sein.

Geeignete Emulgierhilfsmittels sind anionische Tenside wie z.B. Natriumrosinat, Natriumstearat, Kaliumoleat, Natriumlaurat und Natriumdodecylbenzolsulfonat; Kationische Tenside wie z.B. Cetyltrimethylammoniumbromid und Dodecylaminchlorid; Nichtionische Tenside wie z.B. Nonylpolyoxyethylenether und Octylphenylpolyoxyethylenether etc. Diese Emuligierungshilfsmittel können allein oder in Mischung miteinander eingesetzt werden.

Geeignete Lösungsmittel sind Wasser, Alkohole, wie z.B. Methanol, Ethanol, IsoPropanol, n-Propanol, n-Butanol, Iso-Butanol, t-Butanol, n-Amylalkohol, IsoAmylalkohol, t-Amylalkohol, n-Hexanol, n-Octanol, Iso- Octanol, n-Tridecanol, Benzylalkohol etc. Bevorzugt sind weiterhin Glycole wie z.B. Ethylenglycol, 1,2-Propandiol, 1,3-Propandiol, 1,3- Butandiol, 1,4-Butandiol, Diethylenglycol etc.; aliphatische Kohlenwasserstoffe wie Pentan, Hexan, Heptan, Octan, und Petrolether, Petroleumbenzin, Kerosin, Petroleum, Paraffinöl etc.; aromatische Kohlenwasserstoffe wie Benzol, Toluol, Xylol, Mesitylen, Ethylbenzol, Diethylbenzol etc.; Halogenkohlenwasserstoffe wie Methylenchlorid, Chloroform, 1,2-Dichloroethan, Chlorobenzol, Tetrachlorkohlenstoff, Tetrabromoethylen etc.; Alicyclische Kohlenwasserstoffe wie Cyclopentan, Cyclohexan, und Methylcyclohexan etc.; Ether wie Anisol (Methyl phenyl ether), t-Butylmethylether, Dibenzylether, Diethylether, Dioxan, Diphenylether, Methylvinylether, Tetrahydrofuran, Diisopropylether etc.; Glycolether wie Diethylenglycoldiethylether, Diethylenglycoldimethylether (Diglyme), Diethylenglycolmonobutylether, Diethylenglycolmonomethylether, 1,2-Dimethoxyethan (DME Monoglyme), Ethylenglycolmonobutylether, Triethylenglycoldimethylether (Triglyme), Triethylenglycolmonomethylether etc.; Ketone wie Aceton, Diisobutylketon, Methyl-n-propylketon; Methylethylketon, Methyliso-butylketon etc; Ester wie Methylformat, Methylacetat, Ethylacetat, n-Propylacetat und n-Butylacetat etc.; Carbonsäuren wie Ameisensäure, Essigsäure, Propionsäure, Buttersäure etc. Eine oder mehrere dieser Verbindungen können allein oder in Kombination eingesetzt werden.

Als Initiator sind alle Systeme geeignet, die freie Radikale generieren. Besonders bevorzugt sind Peroxoverbindungen und/oder Azoinitiatoren.

Im Falle der Polykondensation werden Monomere und Monomergemische vorgelegt und phosphorhaltiges Flammschutzmittel mit einem Hochgeschwindigkeitsmischer vermischt und zur Polymerisation gebracht.

Geeignete Polyester sind hergeleitet aus der Kondensation von aromatischen, cycloaliphatischen und aliphatischen Diolen mit aliphatischen, aromatischen und cycloaliphatischen Dicarbonsäuren und können cycloaliphatische, aliphatische oder aromatische Polyester sein.

Beispiele sind Polyethylenterephthalate, Polycyclohexylendimethylenterephthalate, Polyethylendodecanate, Polybutylenterephthalate, Polyethylennaphthalat, Polyethylen(2,7-naphthalat), Polymethaphenyleneisophthalate, Polyglykolsäure, Polyethylensuccinat, Polyethyleneadipate, Polyethylensebacat, Polydecamethylenazelat, Polydecamethyleneadipat, Polydecamethylensebacat, Polydimethylpropiolacton, Poly-para-hydroxybenzoat (Ekonol), Polyethylenoxybenzoate (A-tell), Polyethylenisophthalat, Polytetramethylenterephthalat, Polyhexamethylenterephthalat, Polydecamethylenterephthalat, Poly-1,4-cyclohexandimethylenterephthalat (trans), Polyethylen-1,5-naphthalat, Polyethylen-2,6-naphthalat, Poly-1,4-cyclohexylendimethyleneterephthalat (Kodel) (cis/trans).

Geeignete Polyamide sind lineare Polycarbonsäureamide bei denen die wiederkehrende Carbonsäureamidgruppe durch mindestens zwei Kohlenstoffatome voneinander getrennt sind. Beispiele sind das Copolyamid aus 30 % Hexamethylendiammoniumisophthalat und 70 % Hexamethylendiammoniumadipate, Polyhexamethylenadipamide (Nylon 6,6), Polyhexamethylen sebacamid (Nylon 6,10), Polyhexamethylenisophthalamid, Polyhexamethylenterephthalamid, Polyheptamethylenepimelamide (Nylon 7,7), Polyoctamethylenesuberamid (Nylon 8,8), Polynonamethylenazelamide (Nylon 9,9), Poly(decamethylenazelamid) (Nylon 10,9), Polydecamethylensebacamid (Nylon 10,10), Poly-Bis-4-Aminocyclohexylmethan-1,10-decan-carboxamid, Poly-m-xyloladipamid, Poly-p-xylolsebacamid, Poly-2,2,2-Trimethylhexamethylenterephthalamid, Poly-Piperazinsebacamid, Poly-p-phenylenterephthalamid, Polymetaphenyleneisophthalamid etc.
Weitere Beispiele sind Poly-4-aminobuttersäure (Nylon 4), Poly-6-aminohexansäure (Nylon 6), Poly-7-aminoheptansäure (Nylon 7), Poly-8-aminooctansäure (Nylon 8), Poly-9-aminononansäure (Nylon 9), Poly-10-amino-decansäure (Nylon 10), Poly-11-aminoundecansäure (Nylon 11), Poly-12-aminododecansäure (Nylon 12) etc.

Durch das Verfahren der Schmelzdispergierung wird nicht nanoteiliges phosphorhaltiges Flammschutzmittel zu nanoteiligem phosphorhaltigem Flammschutzmittel umgewandelt und gleichzeitig im Polymer dispergiert.

Der Begriff Schmelzdispergierung ist synonym zu Extrudieren, Compoundieren und/oder Herstellung eines Masterbatches.

Das phosphorhaltige Flammschutzmittel kann in thermoplastische Polymere eingearbeitet werden, indem z.B. alle Bestandteile als Pulver und/oder Granulat in einem Mischer vorgemischt und anschließend in einem Compoundieraggregat (z.B. einem Doppelschneckenextruder) in der Polymerschmelze homogenisiert werden. Die Komponenten können auch separat über eine Dosieranlage direkt in das Compoundieraggregat eingebracht werden.

Bei der Schmelzdispergierung wird die Dispergierung des nanoteiligen phosphorhaltigen Flammschutzmittels im Matrixpolymer beeinflusst durch die Zugabe von Compatibilizern, die Mischzeit, die Scherbelastung und die Polymerviskosität.

Im Falle von Polyolefin-Matrixpolymeren sind Compatibilizer wie z.B. Anhydrid-modifizierte Oligomere oder Hydroxy-Gruppen enthaltende Polyolefin Oligomere bevorzugt. Darunter sind besonders Polypropylen-Maleinsäureanhydrid-Copolymer besonders bevorzugt, z.B. ®Polybond 3000 (mit 1,2 % Maleinsäure modifiziertes Polypropylen, Fa Crompton, Middlebury, USA), ®Polybond 3200 und 2000 sowie ®Orevac-CA100 (Elf Atochem Co., Ltd. Maleinsäureanhydrid-Polypropylen-Copolymer, Mw = 30000-50000).

Weitere Beispiele für Compatibilizer sind Organosilane der Struktur:
Rₙ Si X₍₄₋ₙ₎ worin n eine ganze Zahl von 1 bis 3, und R ein organischer Rest darstellt der ein Kohlenstoffatom direkt mit dem Siliziumatom verbunden enthält und worin X ein Alkoxy, Acryloxy, Amino oder Halogenrest ist. Der organische Rest enthält von 1 bis 20 Kohlenstoffatome und kann Alkyl, Aryl, Alkaryl, Arylalkyl, Vinyl, Allyl, Aminoalkyl, Aminoaryl und weitere organische Reste bedeuten die Ether-, Keton-, Ester-, Epoxy-, Amin- und/oder Carboxylgruppen enthalten.

Bevorzugte Silane sind (3-Glycidoxypropyl)trimethoxysilan, 3-Aminopropylmethyl diethoxysilan, Vinyltriethoxysilan, Phenyltriethoxysilan, 3-Mercaptopropylmethyldimethoxysilan, 3-Glycidoxypropyltrimethoxysilane, Bis-(2-hydroxyethyl)-aminopropyltriethoxysilan, (3-Glycidoxypropyl)methyldiethoxysilan, Aminopropyltriethoxysilan und Allyltrimethoxysilan usw.

Weitere Beispiele für Compatibilizer sind quaternäre Ammoniumverbindungen, die mindestens einen Alkylsubstituenten an dem Stickstoffatom hat mit 12 bis 22 Kohlenstoffatomen. Die anderen Stickstoffsubstituenten können (a) linear oder verzweigte Alkylgruppen sein, enthaltend 1 bis 22 Kohlenstoffatomen, (b) Arylalkylgruppen wie z.B. Benzyl und substituierte Benzylgruppen und (c) Arylgruppen, wie z.B. Phenyl- und substituierte Phenylgruppen. Die quarternären Ammoniumverbindungen können durch folgende Formel dargestellt werden:
R¹R²R³R⁴N⁺X⁻ worin M ein Anion ist, wie z.B. Chlorid, Bromid, Iodid, Nitrit, Nitrate, Sulfate, Hydroxide, C₁ bis C₁₈-Carboxylat, und so weiter; worin R¹ eine Alkylgruppe ist, enthaltend 12 bis 22 Kohlenstoffatomen und R², R³ und R⁴ Alkylgruppe sind, enthaltend 12 bis 22 Kohlenstoffatome, Arylalkylgruppen enthaltend 7 bis 22 Kohlenstoffatome, Arylgruppen enthaltend 6 bis 22 Kohlenstoffatome und Mischungen davon.

Bevorzugte quaternäre Ammoniumverbindungen sind diejenigen worin R¹ and R² Alkylgruppen mit 12 bis 22 Kohlenstoffatomen sind und R³ und R⁴ sind Methyl, und diejenigen in denen R¹ Alkylgruppen mit 12 bis 22 Kohlenstoffatomen sind, R² Benzyl ist, und R³ und R⁴ Methyl sind, oder Mischungen davon.

Die langkettigen Alkylgruppen können stammen von natürlichen pflanzlichen und/oder tierischen Fetten oder Ölen oder Petrochemikalien, z.B. Maisöl, Baumwollsaatöl, Kokosnußöl, Sojaöl, Rizinusöl und/oder Talgöl.

Andere Alkylgruppen, die in den quaternären Ammoniumverbindungen enthalten sein können sind Methyl, Ethyl, Propyl, Butyl, Hexyl, 2-Ethylhexyl, Decyl, Dodecyl, Lauryl, Stearyl und dergleichen.

Arylgruppen schließen Phenyl und substituierte Phenylgruppen ein. Arylalkylgruppen schließen Benzyl- und substituierte Benzylgruppen ein.

Erfindungsgemäße quaternäre Ammoniumverbindungen sind Dimethyl-di(hydriertes talgfett)-ammoniumchlorid, Methyl-tri(hydriertes Talgfett)-ammoniumchlorid, Dimethylbenzyl-(hydriertes Talgfett)-ammoniumchlorid, Methylbenzyl-di(hydriertes Talgfett)-ammoniumchlorid, Octadecyldimethyl(3-trimethoxysilylpropyl)ammoniumsalz, Dodecylammoniumsalz, Octadecyltrimethyl ammoniumsalz, Bis(2-hydroxyethyl)octadecylmethylammoniumsalz, Octadecylbenzyldimethylammoniumsalz, Hexadecyltrimethylammoniumsalz und andere.

Als Compoundiermaschinen sind zweiwellige Schneckenkneter in verschiedenen Baugrößen und Ausführungsformen bevorzugt. Bevorzugte Typen sind ZSK Mega Compounder, ZSK Mega Volume (Krupp Werner & Pfleiderer), Bersdorf ZE 25, Leistritz ZSE-27 usw.

Weiterhin bevorzugt sind Ko-Kneter MDK 46 (z.B. mit UD =11 der Firma Buss, Schweiz), das sind einwellige Schneckenkneter mit aufklappbarem Gehäuse.

Bevorzugt sind Temperaturen am Schmelzpunkt des zu verarbeitenden Kunststoffes. Die Schmelze wird üblicherweise als Strang abgezogen, gekühlt und granuliert.

Die erfindungsgemäße Flammschutzmittelzusammensetzung wird bevorzugt in flammgeschützten Polymerformmassen angewendet, die weiter zur Erzeugung von flammgeschützten Polymerformkörpern verwendet werden. Bei dem Polymer der Polymer-Formkörper, -Filme, -Fäden und -Fasern handelt es sich um ein thermoplastisches oder duroplastisches Polymer.

Überraschend wurde gefunden, dass die mechanischen Eigenschaften von flammgeschützten Polymerformkörpern, die auf den erfindungsgemäßen pressgranulierten Flammschutzmittelzusammensetzungen oder flammgeschützten Formmassen basieren, erheblich besser sind, als der Stand der Technik.

### Meßmethoden

### a) Bestimmung der mittleren Teilchengröße

1 g der Feststoffprobe wird mit Hilfe eines Ultraturrax-Mischers in einer Lösung von 3 % Isopropanol in Wasser dispergiert. Die mittlere Teilchengröße wird mit Hilfe der Photokorrelationsspektroskopie unter Verwendung eines Malvern 4700C Instruments bestimmt.

### b) Bestimmung der Teilchengröße des nanoteiligen Flammschutzmittels in der Polymerformmassen- und Polymerformkörper-Matrix

Die Probe des Composites wird in einem Röntgenpulverdiffraktometer Philips PW1710 vermessen (CuK_{alpha 2}-Strahlung, Wellenlänge 1,54439 Angström, Beschleunigungsspannung 35kV, Heizstrom 28 mA, Monochromator, Scangeschwindigkeit 3 Grad 2 theta pro Minute). Die mittlere Primärteilchengröße D wird nach Scherrer aus der Linienbreite (beta) des Röntgenreflexes beim Beugungswinkel theta in Höhe der halben Maximalintensität berechnet: D = 1,54439 [Ang]*57,3/(beta*cosinus (theta)) (siehe H. Krischner. Einführung in die Roentgenfeinstrukturanalyse. Vieweg (1987) 106-110).

### Herstellung, Verarbeitung und Prüfung von flammgeschützten Polymerformmassen und flammgeschützten Polymerformkörpern

Die Flammschutzmittelkomponenten werden mit dem Polymergranulat und evtl. Additiven vermischt und auf einem Doppelschnecken-Extruder (ZSK 25 WLE, 14,5 kg/h, 200 U/min, UD: 4) bei Temperaturen von 170°C (Polystyrol), 230 bis 260°C (PBT), von 260°C (PA6) bzw. von 260 bis 280°C (PA 66) eingearbeitet. Der homogenisierte Polymerstrang wird abgezogen, im Wasserbad gekühlt und anschließend granuliert.

Nach ausreichender Trocknung werden die Formmassen auf einer Spritzgießmaschine (Typ Aarburg Allrounder) bei Massetemperaturen von 240 bis 270°C (PBT) von 275°C (PA 6) bzw. von 260 bis 290°C (PA 66) zu Prüfkörpern verarbeitet.
Bestimmung der mechanischen Werte an flammgeschützten Polymerformkörpern:
Die Reißdehnung wurde in Anlehnung an DIN EN ISO 527-1 bestimmt.
Die Schlagzähigkeit wurde in Anlehnung an ISO 180 bestimmt.

Bestimmung der Flammschutzeigenschaften flammgeschützten Polymerformkörpern: Die Prüfkörper werden anhand des UL 94-Tests (Underwriters Laboratories) auf Flammwidrigkeit (Flammschutz) geprüft und klassifiziert.

An Prüfkörpern aus jeder Mischung wurde die Brandklasse UL 94 (Underwriter Laboratories) an Probekörpern der Dicke 1,5 mm bestimmt. Nach UL 94 ergeben sich folgende Brandklassen:

V-0 kein Nachbrennen länger als 10 sec, Summe der Nachbrennzeiten bei 10 Beflammungen nicht größer als 50 sec, kein brennendes Abtropfen, kein vollständiges Abbrennen der Probe, kein Nachglühen der Proben länger als 30 sec nach Beflammungsende.

V-1 kein Nachbrennen länger als 30 sec nach Beflammungsende, Summe der Nachbrennzeiten bei 10 Beflammungen nicht größer als 250 sec, kein Nachglühen der Proben länger als 60 sec nach Beflammungsende, übrige Kriterien wie bei V-0.

V-2 Zündung der Watte durch brennendes Abtropfen, übrige Kriterien wie bei V-1.
nicht klassifizierbar (nkl) erfüllt nicht die Brandklasse V-2.

Der Glow-Wire-Ignition-Test wurde nach IEC 60695-1-13 bestimmt.

Bestimmung der SV-Zahl (Spezifische Viskosität)
0,5 g der Polymerprobe (z.B. PBT) werden mit 50 ml Dichloressigsäure (LM) in einen 250 ml Erlenmeyerkolben mit Schliffstopfen eingewogen. Die Probe wird unter Rühren bei 25°C über einen Zeitraum von 16 h gelöst. Die Lösung wird über eine G1-Glasfritte filtriert. 20 ml der Lösung werden in die Kapillare gefüllt, in das (Ubbelohde) Kapillarviskosimeter eingehängt und auf 25°C temperiert. Der SV-Wert errechnet sich nach der Formel: SV-Wert = 100*[Durchlaufzeit
(Probenlösung)/Durchlaufzeit (Lösungsmittel)-1].

Statt Dichloressigsäure kann für Polyethylenterephthalat und Polybutylenterephtalat auch ein Gemisch von Phenol und 1,2-Dichlorbenzol (1:1, w/w) oder m-Kresol eingesetzt werden. Für Polyamid können Schwefelsäure, Ameisensäure oder m-Kresol verwendet werden.

### Beispiele

### Beispiel 1

In einem Lödige-Mischer werden 99,9 Gew.-Teile Aluminiumdiethylphosphinat 2 mit 0,1 Gew.-Teilen Alkylsiloxan (als 10 %ige Lösung in Ethanol) gemischt und danach 2 h bei 120°C im Trockenschrank getrocknet.

### Beispiel 2

In einem Lödige-Mischer werden 99 Gew.-Teile Aluminiumdiethylphosphinat 2 mit 1 Gew.-Teilen Alkylsiloxan (als 10 %ige Lösung in Ethanol) gemischt und danach 2 h bei 120°C im Trockenschrank getrocknet.

### Beispiel 3

In einem Lödige-Mischer werden 90 Gew.-Teile Aluminiumdiethylphosphinat 2 mit 10 Gew.- Teilen Alkylsiloxan (als 10 %ige Lösung in Ethanol) gemischt und danach 2 h bei 120°C im Trockenschrank getrocknet.

### Beispiel 4

Eine Lösung von 72 g Natriumdiethylphosphinat in 410,6 g Wasser werden auf 80°C erhitzt und anschließend in einem Mikroreaktor über einen Zeitraum von 3 h mit 107 g Aluminiumsulfatlösung (4,2 Gew.-% Al) versetzt. Das Produkt wird durch Zentrifugieren elektrolytfrei gewaschen und 5 h bei 120°C getrocknet.

### Beispiel 5

Eine Lösung von 72 g Natriumdiethylphosphinat und 0,65 g Polyethylenimin in 410,6 g Wasser werden auf 80°C erhitzt und anschließend in einem Mikroreaktor über einen Zeitraum von 3 h mit 107 g Aluminiumsulfatlösung (4,2 Gew.-% Al) versetzt. Das Produkt wird durch Zentrifugieren elektrolytfrei gewaschen und 5 h bei 120°C getrocknet.

### Beispiel 6

4,54 kg handelsübliches Aluminiumdiethylphosphinat 1 (mittlerer Teilchendurchmesser von ca. 22 µm) werden mit 90,72 kg Wasser 50 h lang in einer Sweco M-45 Mühle gemahlen und danach getrocknet. Die BET Oberfläche ist ca. 66 qm/g, die mittlere Teilchengröße 0,023 µm.

### Beispiel 7

Nach der allgemeinen Vorschrift "Herstellung, Verarbeitung und Prüfung von flammgeschützten Polymerformmassen und flammgeschützten Polymerformkörpern" werden 10 Gewichtsteile Aluminiumdiethylphosphinat 2, 30 Gewichtsteile Glasfasern und 59,9 Gewichtsteile Polyamid 6.6 zu einer Formmasse verarbeitet. Als Compatibilizer werden 0,1 Gewichtsteile Aminosilan eingearbeitet.

### Beispiel 8

Analog Beispiel 7 werden 10 Gewichtsteile Aluminiumdiethylphosphinat 2,
30 Gewichtsteile Glasfasern und 59 Gewichtsteile Polyamid 6.6 zu einer Formmasse verarbeitet. Als Compatibilizer werden 1 Gewichtsteil Glycidoxysilan eingearbeitet.

### Beispiel 9 (Vergleich)

Analog Beispiel 7 wird eine Formmasse bestehend aus 10 Gew.-% Aluminiumdiethylphosphinat 1, 5 Gew.-% Melaminpolyphosphat, 5 Gew.-% Nanoclay, 30 Gew.-% Glasfasern und 50 Gew.-% Polyamid 6.6 hergestellt und zu flammgeschützten Polymerformkörpern verarbeitet. Die nach Underwriter Laboratories UL-94 getesteten Prüfkörper erfüllen die Kategorie V-0.

### Beispiel 10

Analog Beispiel 7 wird eine Formmasse bestehend aus 10 Gew.-% Produkt aus Beispiel 2, 30 Gew.-% Glasfasern und 60 Gew.-% Polyamid 6.6 hergestellt und zu flammgeschützten Polymerformkörpern verarbeitet. Die nach Underwriter Laboratories UL-94 getesteten Prüfkörper erfüllen die Kategorie V-0.

### Beispiel 11

Analog Beispiel 7 wird eine Formmasse bestehend aus 10 Gew.-% Produkt aus Beispiel 3, 30 Gew.-% Glasfasern und 60 Gew.-% Polyamid 6.6 hergestellt und zu flammgeschützten Polymerformkörpern verarbeitet. Die nach Underwriter Laboratories UL-94 getesteten Prüfkörper erfüllen die Kategorie V-0.

### Beispiel 12

Analog Beispiel 7 wird eine Formmasse bestehend aus 10 Gew.-% Produkt aus Beispiel 4, 30 Gew.-% Glasfasern und 60 Gew.-% Polyamid 6.6 hergestellt und zu flammgeschützten Polymerformkörpern verarbeitet. Die nach Underwriter Laboratories UL-94 getesteten Prüfkörper erfüllen die Kategorie V-0.

### Beispiel 13

Analog Beispiel 7 wird eine Formmasse bestehend aus 10 Gew.-% Produkt aus Beispiel 5, 30 Gew.-% Glasfasern und 60 Gew.-% Polyamid 6.6 hergestellt und zu flammgeschützten Polymerformkörpern verarbeitet. Die nach Underwriter Laboratories UL-94 getesteten Prüfkörper erfüllen die Kategorie V-0.

### Beispiel 14

Analog Beispiel 7 wird eine Formmasse bestehend aus 7,5 Gew.-% Produkt aus Beispiel 2, 2,5 Gew.-% Melaminpolyphosphat, 30 Gew.-% Glasfasern und 60 Gew.-% Polyamid 6.6 hergestellt und zu flammgeschützten Polymerformkörpern verarbeitet. Die nach Underwriter Laboratories UL-94 getesteten Prüfkörper erfüllen die Kategorie V-0.

### Beispiel 15

Analog Beispiel 7 wird eine Formmasse bestehend aus 7,5 Gew.-% Produkt aus Beispiel 4, 2,5 Gew.-% Melaminpolyphosphat, 30 Gew.-% Glasfasern und 60 Gew.-% Polyamid 6.6 hergestellt und zu flammgeschützten Polymerformkörpern verarbeitet. Die nach Underwriter Laboratories UL-94 getesteten Prüfkörper erfüllen die Kategorie V-0.

### Beispiel 16

Analog Beispiel 7 wird eine Formmasse bestehend aus 7,5 Gew.-% Produkt aus Beispiel 5, 2,5 Gew.-% Melaminpolyphosphat, 30 Gew.-% Glasfasern und 60 Gew.-% Polyamid 6.6 hergestellt und zu flammgeschützten Polymerformkörpern verarbeitet. Die nach Underwriter Laboratories UL-94 getesteten Prüfkörper erfüllen die Kategorie V-0.

### Beispiel 17

Analog Beispiel 7 wird eine Formmasse bestehend aus 7,5 Gew.-% Produkt aus Beispiel 6 (5a), 2,5 Gew.-% Melaminpolyphosphat, 30 Gew.-% Glasfasern und 60 Gew.-% Polyamid 6.6 hergestellt und zu flammgeschützten Polymerformkörpern verarbeitet. Die nach Underwriter Laboratories UL-94 getesteten Prüfkörper erfüllen die Kategorie V-0.

### Beispiel 18

Analog Beispiel 7 wird eine Formmasse bestehend aus Produkt aus Beispiel 7 hergestellt und zu flammgeschützten Polymerformkörpern verarbeitet. Die nach Underwriter Laboratories UL-94 getesteten Prüfkörper erfüllen die Kategorie V-0.

### Beispiel 19

Analog Beispiel 7 wird eine Formmasse bestehend aus Produkt aus Beispiel 8 (5c) hergestellt und zu flammgeschützten Polymerformkörpern verarbeitet. Die nach Underwriter Laboratories UL-94 getesteten Prüfkörper erfüllen die Kategorie V-0.

### Beispiel 20

Eine Lösung von 72 g Natriumdiethylphosphinat und 0,65 g Lupasol G20 in 410,6 g Wasser werden auf 80°C erhitzt und anschließend über einen Zeitraum von 3 h mit 107 g Aluminiumsulfatlösung (4,2 Gew.-% Al) versetzt. Dann wird 1,0 g lineares Natriumdodecylbenzolsulfonat zugegeben. Während die Reaktionslösung 5 h auf ca. 95°C) erhitzt wird, wird eine Mischung von 0,2 g Pinenhydroperoxid (44% aktiv) und 51,9 g (0,5mol) Styrol mit einer Pumpe zudosiert. Das Produkt wird durch Zentrifugieren elektrolytfrei gewaschen und 5 h bei 120°C getrocknet.

### Beispiel 21

Eine Lösung von 72 g Natriumdiethylphosphinat und 0,65 g Gelatine in 410,6 g Wasser werden auf 80°C erhitzt und anschließend über einen Zeitraum von 3 h mit 107 g Aluminiumsulfatlösung (4,2 Gew.-% Al) versetzt. Dann wird 1,0 g lineares Natriumdodecylbenzolsulfonat zugegeben. Während die Reaktionslösung 5 h auf ca. 95°C) erhitzt wird, wird eine Mischung von 0,2 g Pinenhydroperoxid (44 % aktiv) und 51,9 g (0,5mol) Styrol mit einer Pumpe zudosiert. Das Produkt wird durch Zentrifugieren elektrolytfrei gewaschen und 5 h bei 120°C getrocknet.

### Beispiel 22

275 g entionisiertes Wasser werden auf 80°C erhitzt und anschließend über einen Zeitraum von 30 min mit 41 g Aluminiumtri-sec-butylat versetzt. Dabei entsteht ein Niederschlag, der mit einer Lösung aus 1,16 g konzentrierter Salpetersäure und 80 g entionisiertem Wasser über einen Zeitraum von 1 Stunde gelöst werden kann. Nach dreitägigem Rühren wird das Sol unter Rühren mit 61 g Diethylenphosphinsäure versetzt. Dann wird 1,0 g lineares Natriumdodecylbenzolsulfonat zugegeben. Während die Reaktionslösung 5 h auf ca. 95°C) erhitzt wird, wird eine Mischung von 0,2 g Pinenhydroperoxid (44 % aktiv) und 51,9 g (0,5 mol) Styrol mit einer Pumpe zudosiert. Das Produkt wird durch Zentrifugieren elektrolytfrei gewaschen und 5 h bei 120°C getrocknet.

### Beispiel 23

Mit einem Brabender-Laborkneter wird eine flammgeschützte Polymerformmasse bestehend aus Polystyrol-Polymer und Produkt aus Beispiel 20 (13) hergestellt und zu flammgeschützten Polymerformkörpern verarbeitet. Die nach Underwriter Laboratories UL-94 getesteten Prüfkörper erfüllen die Kategorie V-0.

### Beispiel 24

Mit einem Brabender-Laborkneter wird eine flammgeschützte Polymerformmasse bestehend aus Polystyrol-Polymer und Produkt aus Beispiel 21 hergestellt und zu flammgeschützten Polymerformkörpern verarbeitet. Die nach Underwriter Laboratories UL-94 getesteten Prüfkörper erfüllen die Kategorie V-0.

### Beispiel 25

Mit einem Brabender-Laborkneter wird eine flammgeschützte Polymerformmasse bestehend aus Polystyrol-Polymer und Produkt aus Beispiel 22 (15) hergestellt und zu flammgeschützten Pölymerformkörpern verarbeitet. Die nach Underwriter Laboratories UL-94 getesteten Prüfkörper erfüllen die Kategorie V-0.

### Beispiel 26

Ein Gemisch von 40,8 Gew.-Teile Diurethandimethacrylat aus 2,2,4-Trimethylhexamethylendiisocyanat und 2-Hydroxyethylmethacrylat, 24,5 Gew.-Teile Diurethandiacrylat aus Bis-(diisocyanatomethyl)-tricyclodecan und 2-Hydroxyethylacrylat, 4 Gew.-Teile Dodecandioldimethacrylat, 12,3 Gew.-Teile Tetraacryloyloxyethoxypentaerythrit, 17,9 Gew.-Teile Produkt aus Beispiel 6 (23 18) und 0,18 Gew.-Teile 3-Methacryloylpropyltrimethoxysilan wird mit einer Dreiwalze homogenisiert.

Die Transparenzmessung der Paste erfolgt in einem Photometer (Quarzküvette d = 1 mm, Typ: ELKO 2, Fa. Carl. Zeiss, Filter Nr. S51 E67). Als Referenzlösung dient demineralisiertes Wasser, der Messwert für die Transparenz wird direkt am Gerät abgelesen. Die Transparenz beträgt 70 %.

### Beispiel 27 (Vergleich)

Ein Gemisch von 40,8 Gew.-Teile Diurethandimethacrylat aus 2,2,4-Trimethylhexamethylendiisocyanat und 2-Hydroxyethylmethacrylat, 24,5 Gew.-Teile Diurethandiacrylat aus Bis-(diisocyanatomethyl)-tricyclodecan und 2-Hydroxyethyl-acrylat, 4 Gew.-Teile Dodecandioldimethacrylat, 12,3 Gew.-Teile Tetraacryloyloxyethoxypentaerythrit, 17,9 Gew.-Teile handelsübliches Aluminiumdiethylphosphinat 1 (mittlerer Teilchendurchmesser von ca. 22 µm) und 0,18 Gew.-Teile 3-Methacryloylpropyltrimethoxysilan wird mit einer Dreiwalze homogenisiert.
Die Transparenzmessung ergibt einen Wert von 40 %.

### Beispiel 28

Zum Produkt aus Beispiel 26 werden 0,1 Gew.-Teile Phenanthrenchinon, 0,2 Gew.-Teile N,N-dimethyl-p-toluidin, 0,02 Gew.-Teile 2,6-Di-tert.-butyl-4-methylbenzol gemischt. In offenen Hohlformen aus Metall wird die Masse 360 s lang mit einem Licht-Polymerisationsgerät (Dentacolor XS der Fa. Heraeus Kulzer GmbH) zu einem Probekörper ausgehärtet. Die nach der allgemeinen Vorschrift bestimmte Teilchengröße des nanoteiligen phosphorhaltigen Flammschutzmittels im flammgeschützten Polymerformkörper beträgt 0,1 µm. Die nach Underwriter Laboratories UL-94 getesteten Prüfkörper erfüllen die Kategorie V-0.

**Tabelle 1**

| Beispiel | | 1 | 2 | 3 |
|---|---|---|---|---|
| Aluminiumdiethylphosphinat 1 | Gew.-Teile | 99,9 | 99 | 90 |
| Alkylsiloxan | Gew.-Teile | 0,1 | 1 | 10 |

**Tabelle 2**

| Beispiel | | 9 | 10 | 11 | 12 | 13 | 14 | 15 | 16 | 17 | 18 | 19 |
|---|---|---|---|---|---|---|---|---|---|---|---|---|
| Aluminiumdiethylphosphinat 1 | Gew.-% | 10 | - | - | - | - | - | - | - | - | - | - |
| Melaminpolyphosphat | Gew.-% | 5 | - | - | - | - | 2,5 | 2,5 | 2,5 | 2,5 | - | - |
| Nanoclay | Gew.-% | 5 | - | - | - | - | - | - | - | - | - | - |
| Produkt aus Beispiel 2 | Gew.-% | - | 10 - | - | - | - | 7,5 | - | - | - | - | - |
| Produkt aus Beispiel 3 | Gew.-% | - | - | 10 | - | - | - | - | - | - | - | - |
| Produkt aus Beispiel 4 | Gew.-% | - | - | - | 10 | - | - | 7,5 | - | - | - | - |
| Produkt aus Beispiel 5 | Gew.-% | - | - | - | - | 10 | - | - | 7,5 | - | - | - |
| Produkt aus Beispiel 6 | Gew.-% | - | - | - | - | - | - | - | - | 7,5 | - | - |
| Produkt aus Beispiel 7 | Gew.-% | - | - | - | - | - | - | - | - | - | x | - |
| Produkt aus Beispiel 8 | Gew.-% | - | - | - | - | - | - | - | - | - | - | x |
| Glasfasern | Gew.-% | 30 | 30 | 30 | 30 | 30 | 30 | 30 | 30 | 30 | 30 | 30 |
| Polyamid 6.6 | Gew.-% | 50 | 60 | 60 | 60 | 60 | 60 | 60 | 60 | 60 | 70 | 70 |
| Mittlerer Teilchendurchmesser d50 | µm | 40,00 | 0,50 | 0,10 | 0,20 | 0,20 | 0,25 | 0,15 | 0,20 | 0,05 | 0,40 | 0,30 |
| GWIT nach IEC 60695-1-13 | °C | 800 | 800 | 800 | 825 | 850 | 800 | 850 | 850 | 850 | 825 | 825 |
| Reissdehnung nach DIN 53455 | % | 1,6 | 1,9 | 2,1 | 2 | 2,2 | 2,2 | 2 | 2,2 | 2 | 1,9 | 2,2 |
| Schlagzähigkeit nach ISO 180 Charpy | kJ/m2 | 40 | 55 | 60 | 62 | 55 | 55 | 57 | 60 | 57 | 55 | 62 |

**Tabelle 3**

| Beispiel | | 23 | 24 | 25 |
|---|---|---|---|---|
| Produkt aus Beispiel 20 | Gew.-% | 54,0 | - | - |
| Produkt aus Beispiel 21 | Gew.-% | - | 54,0 | - |
| Produkt aus Beispiel 22 | Gew.-% | - | - | 54,0 |
| Polystyrol | Gew.-% | 46,0 | 46,0 | 46,0 |
| Mittlerer Teilchendurchmesser d50 | µm | 0,25 | 0,15 | 0,15 |
| P-Gehalt | Gew.-% | 7,2 | 7,2 | 7,2 |

**Tabelle 4**

| | |
|---|---|
| Aluminiumdiethylphosphinat 1 | Exolit OP 1230, Fa. Clariant Corporation |
| Aluminiumdiethylphosphinat 2 | Exolit O 930 (TP), Fa. Clariant Corporation |
| Alkylsiloxan | Dynasylan BSM 166, Fa. Degussa |
| Aminosilan | gamma-Aminopropyltriethoxysilan, Silquest A-1100 Silane, Fa. Crompton |
| Glycidoxysilan | 3-Glycidoxypropyltimethoxsilan, Z 6040 Silane, Fa. Dow Corning |
| Nanoclay | Nanofill 919, Fa. Südchemie |
| Polyamid 6.6 | Ultramid A3, Fa. BASF |
| Glasfasern | PPG 3540, Fa. PPG Industries, Inc. |
| Polystyrol | Polystyrol 143 E, Fa. BASF |
| Melaminpolyphosphat | Melapur 200/70, Fa. Ciba SC |
| Polyethylenimin | Lupasol G20, Fa. BASF |

## Patentansprüche

1. Flammgeschützte Polymerformmasse, **dadurch gekennzeichnet, dass** sie nanoteiliges phosphorhaltiges Flammschutzmittel welches mindestens ein Phosphinsäuresalz der Formel (I) und/oder ein Diphosphinsalz der Formel (II) und/oder deren Polymere enthält, 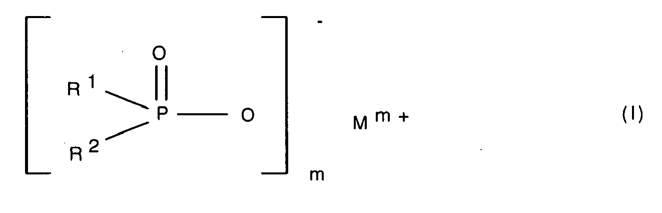 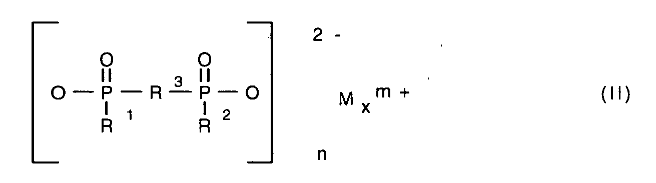
worin
R¹, R² gleich oder verschieden sind und C₁-C₆-Alkyl, linear oder verzweigt und/oder Aryl;
R³ C₁-C₁₀-Alkylen, linear oder verzweigt, C₆-C₁₀-Arylen, -Alkylarylen oder -Arylalkylen;
M Mg, Ca, Al, Sb, Sn, Ge, Ti, Fe, Zr, Zn, Ce, Bi, Sr, Mn, Li, Na, K und/oder eine protonierte Stickstoffbase;
m 1 bis 4;
n 1 bis 4;
x 1 bis 4 bedeuten, enthält.

2. Flammgeschützte Polymerformmasse nach Anspruch 1, **dadurch gekennzeichnet, dass** R¹, R² gleich oder verschieden sind und C₁-C₆-Alkyl, linear oder verzweigt und/oder Phenyl bedeuten.

3. Flammgeschützte Polymerformmasse nach Anspruch 1 oder 2, **dadurch gekennzeichnet, dass** R¹, R² gleich oder verschieden sind und Methyl, Ethyl, n-Propyl, iso-Propyl, n-Butyl, tert.-Butyl, n-Pentyl und/oder Phenyl bedeuten.

4. Flammgeschützte Polymerformmasse nach einem oder mehreren der Ansprüche 1 bis 3, **dadurch gekennzeichnet, dass** R³ Methylen, Ethylen, n-Propylen, iso-Propylen, n-Butylen, tert.-Butylen, n-Pentylen, n-Octylen oder n-Dodecylen; Phenylen oder Naphthylen; Methyl-phenylen, Ethyl-phenylen, tert.-Butylphenylen, Methyl-naphthylen, Ethyl-naphthylen oder tert.-Butylnaphthylen; Phenyl-methylen, Phenyl-ethylen, Phenyl-propylen oder Phenyl-butylen bedeutet.

5. Flammgeschützte Polymerformmasse nach einem oder mehreren der Ansprüche 1 bis 4, **dadurch gekennzeichnet, dass** die Teilchengröße des nanoteiligen phosphorhaltigen Flammschutzmittels 1 bis 1.000 nm, bevorzugt 5 bis 500 nm, beträgt.

6. Flammgeschützte Polymerformmasse nach einem oder mehreren der Ansprüche 1 bis 5, **dadurch gekennzeichnet, dass** die Oberfläche des nanoteiligen phosphorhaltigen Flammschutzmittels nach BET 2 bis 1.000 qm/g, bevorzugt 5 bis 500 qm/g beträgt.

7. Flammgeschützte Polymerformmasse nach einem oder mehreren der Ansprüche 1 bis 6, **dadurch gekennzeichnet, dass** das nanoteilige phosphorhaltige Flammschutzmittel 0,01 bis 10 Gew.-% Schutzkolloide und/oder Kristallisationsmodifikatoren enthält.

8. Flammgeschützte Polymerformmasse nach einem oder mehreren der Ansprüche 1 bis 7, **dadurch gekennzeichnet, dass** sie
0,5 bis 45 Gew.-% nanoteiliges phosphorhaltiges Flammschutzmittel,
0,5 bis 95 Gew.-% Polymer oder Mischungen derselben
enthält, wobei die Summe der Komponenten 100 Gew.-% beträgt.

9. Flammgeschützte Polymerformmasse nach einem oder mehreren der Ansprüche 1 bis 7, **dadurch gekennzeichnet, dass** sie
0,5 bis 45 Gew.-% nanoteiliges phosphorhaltiges Flammschutzmittel,
0,5 bis 95 Gew.-% Polymer oder Mischungen derselben
0,5 bis 55 Gew.-% Additive
0,5 bis 55 Gew.-% Füllstoff bzw. Verstärkungsmaterialien
enthält, wobei die Summe der Komponenten 100 Gew.-% beträgt.

10. Flammgeschützte Polymerformmasse nach einem oder mehreren der Ansprüche 1 bis 7, **dadurch gekennzeichnet, dass** sie
10 bis 40 Gew.-% nanoteiliges phosphorhaltiges Flammschutzmittel,
10 bis 80 Gew.-% Polymer oder Mischungen derselben
2 bis 40 Gew.-% Additive
2 bis 40 Gew.-% Füllstoff bzw. Verstärkungsmaterialien
enthält, wobei die Summe der Komponenten 100 Gew.-% beträgt.

11. Flammgeschützte Polymerformmasse nach einem oder mehreren der Ansprüche 1 bis 10, **dadurch gekennzeichnet, dass** es sich bei dem Polymer um ein thermoplastisches oder duroplastisches Polymer handelt.

12. Flammgeschützte Polymerformmasse nach Anspruch 11, **dadurch gekennzeichnet, dass** es sich bei den thermoplastischen Polymeren um Polystyrol-HI (High-Impact), Polyphenylenether, Polyamide, Polyester, Polycarbonate, Polyolefine, Polyether und Blends oder Polymerblends vom Typ ABS (Acrylnitril-Butadien-Styrol) oder PC/ABS (Polycarbonat/Acrylnitril-Butadien-Styrol), Polyamid, Polyester, Polyarylate, Polymethacrylate und/oder ABS handelt.

13. Flammgeschützte Polymerformmasse nach Anspruch 11, **dadurch gekennzeichnet, dass** es sich bei den duroplastischen Polymeren um Formaldehyd-, Epoxid-, Melamin-, Phenolharz-Polymere und/oder Polyurethane handelt.

14. Flammgeschützten Polymerformmassen nach Anspruch 10 oder 11, **dadurch gekennzeichnet, dass** es sich bei dem Additiv um eine Stickstoff-, Phosphor- oder Phosphorstickstoffverbindung handelt.

15. Flammgeschützte Polymerformmassen nach einem oder mehreren der Ansprüche 9 bis 14, **dadurch gekennzeichnet, dass** es sich bei dem Additiv um Stickstoffverbindungen der Formeln (III) bis (VIII) oder Gemische davon handelt, 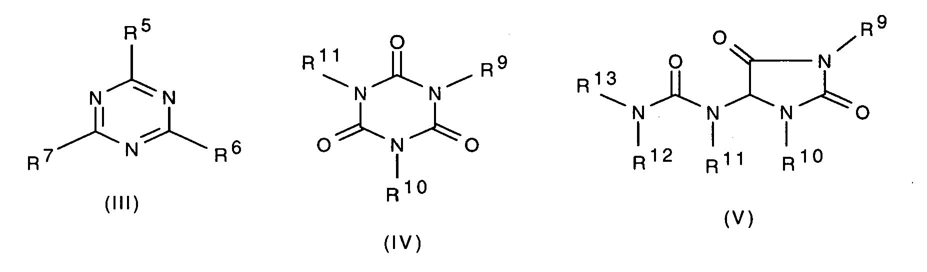 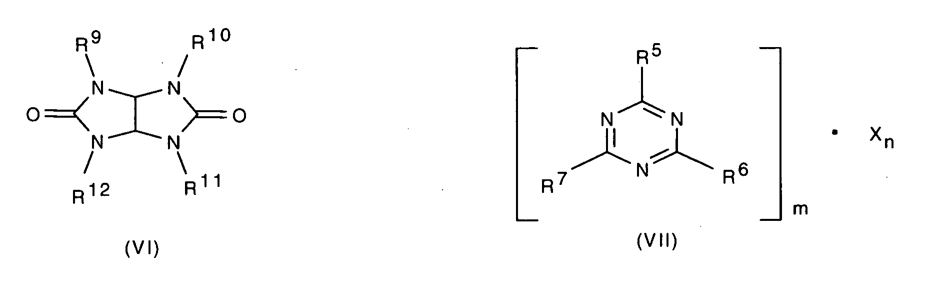 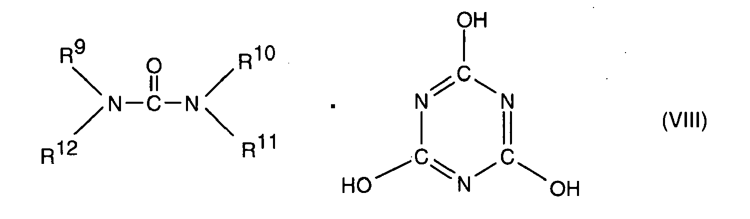
worin
R⁵ bis R⁷ Wasserstoff, C₁-C₈-Alkyl, C₅-C₁₆-Cycloalkyl oder -Alkylcycloalkyl, ggf. substituiert mit einer Hydroxy- oder einer C₁-C₄-Hydroxyalkyl-Funktion, C₂-C₈-Alkenyl, C₁-C₈-Alkoxy, -Acyl, -Acyloxy, C₆-C₁₂-Aryl oder -Arylalkyl, -OR⁸ und -N(R⁸)R⁹, sowie N-alicyclisch oder N-aromatisch,
R⁸ Wasserstoff, C₁-C₈-Alkyl, C₅-C₁₆-Cycloalkyl oder -Alkylcycloalkyl, ggf. substituiert mit einer Hydroxy- oder einer C₁-C₄-Hydroxyalkyl-Funktion, C₂-C₈-Alkenyl, C₁-C₈-Alkoxy, -Acyl, -Acyloxy oder C₆-C₁₂-Aryl oder -Arylalkyl,
R⁹ bis R¹³ die gleichen Gruppen wie R⁸ sowie -O-R⁸,
m und n unabhängig voneinander 1, 2, 3 oder 4,
X Säuren, die Addukte mit Triazinverbindungen (III) bilden können, bedeuten, handelt.

16. Flammgeschützte Polymerformmassen nach einem oder mehreren der Ansprüche 9 bis 15, **dadurch gekennzeichnet, dass** es sich bei dem Additiv um Stickstoffverbindungen wie Melamin, Melaminkondensationsprodukte wie Melam, Melem und/oder Melon; Benzoguanamin, Tris(hydroxyethyl)isocyanurat, Allantoin, Glycouril, Dicyandiamid und/oder Guanidin handelt.

17. Flammgeschützte Polymerformmassen nach einem oder mehreren der Ansprüche 9 bis 14, **dadurch gekennzeichnet, dass** es sich bei dem Additiv um Melaminphosphat, Dimelaminphosphat, Melaminpyrophosphat, Melaminpolyphosphate, Melampolyphosphate, Melempolyphosphate und/oder Melonpolyphosphate und/oder um Melamincyanurat und/oder Harnstoffcyanurat handelt.

18. Flammgeschützte Polymerformmassen nach Anspruch 9 oder 10, **dadurch gekennzeichnet, dass** es sich bei dem Additiv um Zinkverbindungen wie Zinkoxid, Zinkhydroxid, Zinkoxidhydrat, wasserfreies Zinkcarbonat, basisches Zinkcarbonat, Zinkhydroxidcarbonat, basisches Zinkcarbonathydrat, (basisches) Zinksilicat, Zinkhexafluorosilicat, Zinkstannat, Zink-Magnesium-Aluminium-Hydroxid-Carbonat, Zinkhexafluorosilicathexahydrat, Zinksalze der Oxosäuren der dritten Hauptgruppe wie Zinkborat, Zinksalze der Oxosäuren der fünften Hauptgruppe wie Zinkphosphat, Zinkpyrophosphat, Zinksalze der Oxosäuren der Übergangsmetalle, wie Zinkchromat(VI)hydroxyd (Zinkgelb), Zinkchromit, Zinkmolybdat, Zinkpermanganat, Zinkmolybdat-Magnesiumsilicat, Zinkpermanganat, handelt.

19. Flammgeschützte Polymerformmassen nach Anspruch 9 oder 10, **dadurch gekennzeichnet, dass** es sich bei dem Additiv um Antimonverbindungen wie Antimontrioxid, Antimontetroxid, Antimonpentoxid, Natriumantimonat und/oder Antimontartrat handelt.

20. Flammgeschützte Polymerformmassen nach Anspruch 9 oder 10, **dadurch gekennzeichnet, dass** es sich bei dem Additiv um oligomere Ester des Tris(hydroxyethyl)isocyanurats mit aromatischen Polycarbonsäuren, Carbodiimide, N,N'-Dicyclohexylcarbodiimid, Polyisocyanate, Carbonylbis-caprolactam, Styrol-Acryl-Polymere, sterisch gehinderten Phenole, und/oder um stickstoffhaltige Phosphate der Formeln (NH₄)_{y} H_{3-y} PO₄ bzw. (NH₄ PO₃)_{z}, mit y gleich 1 bis 3 und z gleich 1 bis 10.000, oder Trennmittel handelt.

21. Flammgeschützte Polymerformmassen nach einem oder mehreren der Ansprüche 9 bis 20, **dadurch gekennzeichnet, dass** es sich bei dem Additiv um mindestens ein Compatibilizer handelt.

22. Flammgeschützte Polymerformmassen nach Anspruch 21, **dadurch gekennzeichnet, dass** es sich bei dem Compatibilizer um Anhydrid-modifizierte Oligomere oder Hydroxy-Gruppen enthaltende Polyolefin Oligomere, bevorzugt um Polypropylen-Maleinsäureanhydrid-Copolymer, Polyvinylpyrrolidon, Polyvinylalkohol, Polyethylenglycol, Polytetrahydrofuran, Polystyrol, Polycaprolacton, Organosilane und/oder quaternäre Ammoniumverbindungen handelt.

23. Flammgeschützte Polymerformmassen nach einem oder mehreren der Ansprüche 1 bis 22, **dadurch gekennzeichnet, dass** bei Polybutylenterephthalat-Formmassen die SV-Zahlen 750 bis 1.400, bevorzugt 950 bis 1.300 und insbesondere 1.000 bis 1.200 betragen.

24. Flammgeschützte Polymerformmassen nach einem oder mehreren der Ansprüche 1 bis 22, **dadurch gekennzeichnet, dass** bei glasfaserverstärkten flammgeschützten Polymerformmassen auf Basis von Polyamid 6.6 der MVR-Wert 2 bis 200 cm³/min (275°C, 5 kg) beträgt.

25. Flammgeschützte Polymerformmassen nach einem oder mehreren der Ansprüche 1 bis 24, **dadurch gekennzeichnet, dass** die Restfeuchte der flammgeschützten Polymerformmassen 0,01 bis 10 Gew.-%, bevorzugt 0,1 bis 1 % beträgt.

26. Flammgeschützte Polymerformmassen nach einem oder mehreren der Ansprüche 1 bis 25, **dadurch gekennzeichnet, dass** ihre Transparenz 70 bis 100 % beträgt.

27. Verfahren zur Herstellung von flammgeschützten Polymerformmassen nach einem oder mehreren der Ansprüche 1 bis 26, **dadurch gekennzeichnet, dass** das phosphorhaltige Flammschutzmittel in einem Compoundieraggregat in die Polymerformmasse oder Polymeren dispergiert wird.

28. Verfahren zur Herstellung von flammgeschützten Polymerformmassen nach einem oder mehreren der Ansprüche 1 bis 26, **dadurch gekennzeichnet, dass** das phosphorhaltige Flammschutzmittel mit der Polymerformmasse in einem Compoundieraggregat in Polymeren dispergiert wird.

29. Verfahren zur Herstellung von flammgeschützten Polymerformmassen nach Anspruch 27 oder 28, dass weitere Polymere, Additive, Hilfsmittel, insbesondere Dispergiermittel und/oder Compatibilizer zugesetzt werden.

30. Verfahren zur Herstellung von flammgeschützten Polymerformmassen nach einem oder mehreren der Ansprüche 27 bis 29, **dadurch gekennzeichnet, dass** es sich bei den Compoundieraggregaten um ein- und zweiwellige Schneckenkneter, Co-Kneter, Brabenderkneter, Kalander, Walzenstühle, Dreiwalzen oder Walzenmühlen handelt.

31. Verfahren nach einem oder mehreren der Ansprüche 27 bis 30, **dadurch gekennzeichnet, dass** die Temperatur 50 bis 150°C, die Reaktionszeit 0,01 bis 100 h und der Druck 1 und 200 MPa beträgt.

32. Verfahren zur Herstellung von flammgeschützten Polymerformmassen nach einem oder mehreren der Ansprüche 27 bis 31, **dadurch gekennzeichnet, dass** als Additiv mindestens ein Compatibilizer in Mengen von 0,01 bis 10 Gew.-%, bevorzugt 1 bis 5 Gew.-% (bezogen auf nanoteiliges phosphorhaltiges Flammschutzmittel) zugesetzt wird.

33. Verfahren zur Herstellung von flammgeschützten Polymerformmassen nach Anspruch 32, **dadurch gekennzeichnet, dass** der Compatibilizer Anhydrid-modifizierte Oligomere oder Hydroxygruppen enthaltende Polyolefin Oligomere, bevorzugt Polypropylen-Maleinsäureanhydrid-Copolymer, Polyvinylpyrrolidon, Polyvinylalkohol, Polyethylenglycol, Polytetrahydrofuran, Polystyrol, Polycaprolacton, Organosilane und/oder quaternäre Ammoniumverbindungen enthält.

34. Verfahren nach einem oder mehreren der Ansprüche 27 bis 33, **dadurch gekennzeichnet, dass** die Verarbeitungstemperaturen bei
Polystyrol 170 bis 200°C,
Polypropylen 200 bis 300°C,
Polyethylenterephthalat (PET) 250 bis 290°C,
Polybutylenterephthalat (PBT) 230 bis 270°C,
Polyamid 6 (PA 6) 260 bis 290°C,
Polyamid 6.6 (PA 6.6) 260 bis 290 °C,
Polycarbonat 280 bis 320°C
betragen.

35. Verfahren nach Anspruch 34, **dadurch gekennzeichnet, dass** die L/D-Werte des Extruders 1 bis 100, bevorzugt 2 bis 50 betragen.

36. Verfahren nach einem oder mehreren der Ansprüche 27 bis 36, **dadurch gekennzeichnet, dass** die Scherraten des Compoundieraggregats 10 sec⁻¹ bis 20.000 sec⁻¹ betragen, bevorzugt 100 sec⁻¹ bis 10.000 sec⁻¹.

37. Polymer-Formkörper, -Filme, -Fäden und -Fasern enthaltend ein nanoteiliges phosphorhaltiges Flammschutzmittel, welches ein Phosphinsäuresalz der Formel (I) und/oder ein Diphosphinsäuresalz der Formel (II) und/oder deren Polymere enthält, 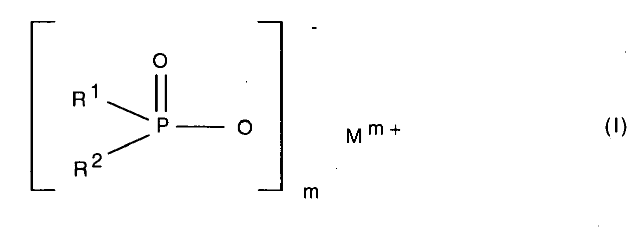 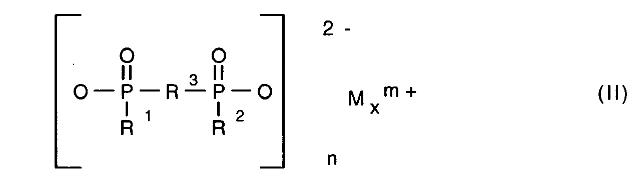
worin
R¹, R² gleich oder verschieden sind und C₁-C₆-Alkyl, linear oder verzweigt und/oder Aryl;
R³ C₁-C₁₀-Alkylen, linear oder verzweigt, C₆-C₁₀-Arylen, -Alkylarylen oder -Arylalkylen;
M Mg, Ca, Al, Sb, Sn, Ge, Ti, Fe, Zr, Zn, Ce, Bi, Sr, Mn, Li, Na, K und/oder eine protonierte Stickstoffbase;
m 1 bis 4;
n 1 bis 4;
x 1 bis 4 bedeuten.

38. Polymer-Formkörper, -Filme, -Fäden und -Fasern nach Anspruch 37, **dadurch gekennzeichnet, dass** sie
0,5 bis 45 Gew.- % nanoteiliges phosphorhaltiges Flammschutzmittel,
0,5 bis 95 Gew.-% Polymer oder Mischungen derselben
enthalten.

39. Polymer-Formkörper, -Filme, -Fäden und -Fasern nach Ansprüche 37 oder 38, **dadurch gekennzeichnet, dass** sie
0,5 bis 45 Gew.- % nanoteiliges phosphorhaltiges Flammschutzmittel,
0,5 bis 95 Gew.-% Polymer oder Mischungen derselben
0,5 bis 55 Gew.-% Additive
0,5 bis 55 Gew.-% Füllstoff bzw. Verstärkungsmaterialien
enthalten.

40. Polymer-Formkörper, -Filme, -Fäden und -Fasern nach Anspruch 39, **dadurch gekennzeichnet, dass** sie
10 bis 40 Gew.- % nanoteiliges phosphorhaltiges Flammschutzmittel,
10 bis 80 Gew.-% Polymer oder Mischungen derselben
2 bis 40 Gew.-% Additive
2 bis 40 Gew.-% Füllstoff bzw. Verstärkungsmaterialien
enthalten.

41. Polymer-Formkörper, -Filme, -Fäden und -Fasern enthaltend flammgeschützte Polymerformmasse nach mindestens einem der Ansprüche 1 bis 25.

42. Polymer-Formkörper, -Filme, -Fäden und -Fasern nach Anspruch 40, **dadurch gekennzeichnet, dass** sie
60 bis 98 Gew.- % flammgeschützte Polymerformmasse,
1 bis 40 Gew.-% Polymer oder Mischungen derselben
enthalten.

43. Polymer-Formkörper, -Filme, -Fäden und -Fasern nach Anspruch 42, **dadurch gekennzeichnet, dass** sie
60 bis 98 Gew.- % flammgeschützte Polymerformmasse,
1 bis 40 Gew.-% Polymer oder Mischungen derselben
0,2 bis 40 Gew.-% Additive
0,2 bis 40 Gew.-% Füllstoff bzw. Verstärkungsmaterialien
enthalten.

44. Polymer-Formkörper, -Filme, -Fäden und -Fasern nach einem oder mehreren der Ansprüche 37 bis 43, **dadurch gekennzeichnet, dass** der E-Modul bei Polybutylenterephthalat oder Polyamid 6.6 oder Polyamid 6 10.000 bis 12.000 MPa beträgt.

45. Polymer-Formkörper, -Filme, -Fäden und -Fasern nach einem oder mehreren der Ansprüche 37 bis 44, **dadurch gekennzeichnet, dass** die UL-94-Klassifizierung der Polymerformkörper V-1 oder V-0 beträgt.

46. Polymer-Formkörper, -Filme, -Fäden und -Fasern nach einem oder mehreren der Ansprüche 37 bis 45, **dadurch gekennzeichnet, dass** ihre Reißdehnung bei Polybutylenterephthalat 1,3 bis 3, bevorzugt 1,9 bis 2,2 % beträgt.

47. Polymer-Formkörper, -Filme, -Fäden und -Fasern nach einem oder mehreren der Ansprüche 37 bis 46, **dadurch gekennzeichnet, dass** ihre Schlagzähigkeit bei Polybutylenterephthalat 45 bis 70, bevorzugt 55 bis 62 kJ/qm, beträgt.

48. Polymer-Formkörper, -Filme, -Fäden und -Fasern nach einem oder mehreren der Ansprüche 37 bis 47, **dadurch gekennzeichnet, dass** ihre Glühdrahttemperatur (Glow Wire Ignition Test, GWIT) bei Polybutylenterephthalat 750 bis 900, bevorzugt 775 bis 875°C beträgt.

49. Polymer-Formkörper, -Filme, -Fäden und -Fasern nach einem oder mehreren der Ansprüche 37 bis 48, **dadurch gekennzeichnet, dass** ihre Transparenz 70 bis 100 % beträgt.

50. Polymer-Formkörper, -Filme, -Fäden und -Fasern nach einem oder mehreren der Ansprüche 37 bis 49, **dadurch gekennzeichnet, dass** die Teilchengröße des nanoteiligen phosphorhaltigen Flammschutzmittels 1 bis 1.000 nm, bevorzugt 5 bis 500 nm, und/oder die Oberfläche des nanoteiligen phosphorhaltigen Flammschutzmittels nach BET 2 bis 1.000 qm/g, bevorzugt 5 bis 500 qm/g beträgt und/oder das nanoteilige phosphorhaltige Flammschutzmittel 0,01 bis 10 Gew.-% Schutzkolloide und/oder Kristallisationsmodifikatoren enthält.

51. Verfahren zur Herstellung von Polymerformkörper, -filmen, -fäden und -fasern nach einem oder mehreren der Ansprüche 37 bis 50, **dadurch gekennzeichnet, dass** es sich um Spritzgießen handelt.

52. Verfahren nach Anspruch 51, **dadurch gekennzeichnet, dass** die Verarbeitungstemperaturen bei
bei Polystyrol 200 bis 250°C,
bei Polypropylen 200 bis 300°C,
bei Polyethylenterephthalat (PET) 250 bis 290°C,
bei Polybutylenterephthalat (PBT) 230 bis 270°C,
bei Polyamid 6 (PA 6) 260 bis 290°C,
bei Polyamid 6.6 (PA 6.6) 6.6 260 bis 290°C,
bei Polycarbonat 280 bis 320°C
betragen.
